# EUROPÄISCHE PATENTSCHRIFT

(11) **EP 4 010 276 B1**
(45) Veröffentlichungstag und Bekanntmachung des Hinweises auf die Patenterteilung: **20.09.2023**
(21) Anmeldenummer: 20743572.8
(22) Anmeldetag: 21.07.2020
(51) Int. Cl.: B65G 43/08, B65G 47/08, B65G 21/20, G01B 21/06

(54) **VORRICHTUNG UND VERFAHREN ZUM UMGANG MIT UND/ODER ZUR HANDHABUNG VON IN MINDESTENS EINER REIHE BEWEGTEN STÜCKGÜTERN**
APPARATUS AND METHOD FOR HANDLING PIECE GOODS MOVING IN AT LEAST ONE ROW
DISPOSITIF ET PROCÉDÉ DE MANUTENTION ET/OU DE MANIPULATION D'AU MOINS UNE RANGÉE DE MARCHANDISES DE DÉTAIL EN DÉFILEMENT

(30) Priorität: 08.08.2019 DE 102019121429
(43) Veröffentlichungstag der Anmeldung: 15.06.2022
(73) Patentinhaber: Krones Aktiengesellschaft, 93073 Neutraubling (DE)
(72) Erfinder: HENSEL, Thomas, 93073 Neutraubling (DE); KOLLMUSS, Manuel, 93073 Neutraubling (DE); LEHNER, Thomas, 93073 Neutraublin (DE)
(74) Vertreter: Benninger, Johannes
(86) Internationale Anmeldenummer: PCT/EP2020/070515
(87) Internationale Veröffentlichungsnummer: WO 2021/023504

(56) Entgegenhaltungen:
- CN-A- 104 251 683
- DE-A1-102016 211 281
- DE-A1-102017 002 752
- DE-A1-102017 118 928
- JP-A- S5 830 612
- JP-A- 2013 107 119
- US-A1- 2016 096 274
- US-A1- 2016 362 258

## Beschreibung

Die vorliegende Erfindung betrifft ein Verfahren sowie eine Vorrichtung zum Umgang mit und/oder zur Handhabung von in mindestens einer Reihe bewegten Stückgütern mit den Merkmalen der unabhängigen Ansprüche.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zu Lagen zusammengestellt, um gewünschte Lagenbilder zu erzeugen, so dass diese in aller Regel einen rechteckigen Grundriss aufweisenden Stückgutlagen anschließend mehrfach übereinandergestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln.

Damit die solchermaßen gebildeten Paletten transportsicher sind, müssen die zusammengestellten Lagenbilder, die auch als zusammengestellte Takte bezeichnet werden können, bestimmte Anforderungen erfüllen. Herkömmlicherweise sind zur Ausbildung solcher Takte vorbereitende Maßnahmen notwendig, die etwa darin bestehen können, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Solche auch als Gruppiertische bezeichnete Lagenbildungstische, die dem Zusammenführen von Stückgütern wie z.B. Kartons, Schrumpfpacks, Trays oder Kunststoffkisten dienen, können unterschiedlich ausgeführt sein. So können etwa Stückgüter zusammengeführt werden, indem sie in eine zweidimensionale Formation (Blockbildung, z.B. Palettenschicht) gebracht werden. Zu diesem Zweck kann bspw. eine Rollenbahn aus einer Gasse oder aus mehreren Gassen in linearer Förderrichtung bzw. in parallelen Förderrichtungen versorgt werden. Die Stückgüter können je nach Bedarf vor oder auf dem Rollenförderer mechanisch durch Stoppstellen in der jeweils benötigten Position angeordneten werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus benötigt, wobei normalerweise jedoch mehrere Zyklen benötigt werden.

Die teilweise diskontinuierliche Förderung mit ihren relativ abrupten Geschwindigkeits- und/oder Richtungsänderungen oder auch andere, hier nicht genannte Einflüsse können dazu führen, dass einzelne Stückgüter zumindest geringfügig aus ihrem Takt oder ihrer üblicherweise eingenommenen Position geraten und demzufolge während der Lagenbildung möglicherweise ungenau positioniert werden.

Um diese Ungenauigkeiten zu vermeiden oder zu reduzieren oder um zumindest negative Auswirkungen im Lagenbildungsprozess zu vermeiden, stehen grundsätzlich mehrere Möglichkeiten zur Verfügung, so etwa das mechanische Abtasten der Positionen von transportierten Stückgütern, um Fehlstellungen erkennen zu können.

Eine derartige mechanisch arbeitende Messeinrichtung zum Erfassen von Staulagenänderungen bei einem Stauvorgang von auf einem mehrbahnigen Förderband transportierten Flaschen oder anderen Gefäßen ist bspw. durch die DE 36 07 858 A1 bekannt. Das Messmittel befindet sich an einem seitlichen Geländerabschnitt und wird durch ein Tastglied gebildet, das aus der Führungsseite des Geländerabschnittes in die Transportbahn mit den beförderten Flaschen ragt.

Eine weitere mechanisch arbeitende Messeinrichtung mit einem schwenkbaren und pendelnd gelagerten Tastglied zur Abtastung eines Produktstroms geht aus der WO 2017/141066 A1 hervor. Die vom Produktstrom beeinflusste Position des schwenkbaren Tastgliedes wird von einem Sensor erfasst.

Da solche mechanisch arbeitenden Sensoren hinsichtlich ihrer Genauigkeit, aber auch hinsichtlich der damit erzielbaren Verarbeitungsgeschwindigkeiten schnell an ihre Grenzen geraten, werden oftmals auch elektronisch arbeitende Sensoreinrichtungen zur Erfassung der Positionen und/oder Ausrichtungen von transportierten Stückgütern eingesetzt. Sofern nicht nur Fehlstellungen von transportierten Stückgütern erfasst werden, sondern diese auch ausgerichtet werden sollen, so eignet sich hierfür eine Ausrichtungsvorrichtung, wie sie etwa durch die WO 2004/076319 A1 offenbart ist. Dort werden sensorisch die Stückgutpositionen sowie deren Größen und Ausrichtungen erfasst, wonach aktuatorisch auf die Stückgüter eingewirkt wird, um diese in eine gewünschte Soll-Ausrichtung oder Soll-Positionierung zu bringen.

Die DE 10 2013 202 872 A1 offenbart ein Verfahren zum Ausrichten und/oder Gruppieren von Stückgütern, die in einer Reihe hintereinander zu einer Gruppierstation befördert und dort mittels eines in horizontaler Richtung beweglichen und/oder rotierbaren Manipulators an einer Seitenfläche kontaktiert und verschoben und/oder gedreht werden. Der Manipulator umfasst einen Stab, dessen Bewegungsverlauf während des Verschiebe- und/oder Drehvorganges eines jeweiligen Stückgutes auf Basis der Signale eines optischen Sensors oder einer Kamera mit nachgeschalteter Bildverarbeitung gesteuert wird.

Ein Verfahren zum Erfassen und gezielten Aussondern von einzelnen Stückgütern, die hintereinander auf einem flächigen Förderorgan transportiert werden, ist durch die WO 2016/023135 A1 offenbart. Lageinformationen der Stückgüter werden fortlaufend auf optischem Wege erfasst und auszusondernde Stückgüter mittels eines Schiebers seitlich aus dem Transportweg der übrigen Stückgüter verschoben.

Die DE 10 2017 002 752 A1 offenbart darüber hinaus eine Vorrichtung und ein Verfahren zur Handhabung von in einer Reihe hintereinander bewegten Stückgütern zum Ausbilden einer palettierfähigen Lage. Die Stückgüter werden beabstandet voneinander aus einer Verpackungsmaschine transportiert und über eine Horizontalfördereinrichtung einem Gruppiermodul zugeführt, das einen Erfassungsbereich für die Stückgüter mit einem sich darin bewegenden Manipulator aufweist. Der Manipulator kann die Stückgüter einzeln oder zu mehreren erfassen und durch Verschieben und/oder Drehen in eine definierte Zielposition und/oder Zielausrichtung bringen, die einer Soll-Position innerhalb einer palettierfähigen Stückgutlage entspricht. Für die Bewegungssteuerung des Manipulators können Ausgangssignale eines optischen Sensors ausgewertet werden, die Raumkoordinaten und/oder Positionen der Stückgüter erfassen.

Die Offenlegungsschrift US 2016/0096274 A1 beschreibt ein Verfahren zur Handhabung von in mindestens einer Reihe bewegten Stückgütern nach dem Oberbegriff des Anspruchs 1 und eine Handhabungsvorrichtung nach dem Oberbegriff des Anspruchs 5.

Angesichts des bekannten Standes der Technik kann es als vorrangiges Ziel der Erfindung angesehen werden, eine Handhabungsvorrichtung für in mindestens einer Reihe bewegte Stückgüter zur Verfügung zu stellen, die in der Lage ist, durch sensorische Erfassung von Stückgutparametern im Vorfeld oder stromaufwärts einer Manipulationseinrichtung unterschiedliche Steuerungsparameter der Manipulationseinrichtung individuell anzupassen, so dass auch bei Abweichungen zwischen einem Soll-Zustand der Stückgüter und ihrem Ist-Zustand eine zuverlässige Erfassung, Handhabung und ggf. Gruppierung der Stückgüter durch die Manipulationseinrichtung gewährleistet werden kann. Ein Ziel der Erfindung besteht zudem darin, ein entsprechendes Verfahren zur Handhabung von in mindestens einer Reihe bewegten Stückgütern anzugeben.

Die oben genannten Ziele der Erfindung werden durch die Gegenstände der unabhängigen Ansprüche erreicht. Weitere vorteilhafte Ausgestaltungen werden durch die jeweiligen abhängigen Ansprüche beschrieben.

Zur Erreichung der genannten Ziele schlägt die vorliegende Erfindung ein Verfahren zum Umgang mit und/oder zur Handhabung von in mindestens einer Reihe bewegten Stückgütern nach Anspruch 1 vor, insbesondere im Zusammenhang und zum Zwecke der Ausbildung von Stückgutlagen definierter Größe, die in der Folge mehrfach aufeinander und übereinander gestapelt werden können. Hierbei können die hintereinander bewegten Stückgüter einer Reihe jeweils ungefähr gleiche oder unterschiedliche, wahlweise auch variable Abstände voneinander aufweisen. Bei dem Verfahren werden Stückgüter von einer vorgeordneten, hier nicht näher bezeichneten Verpackungs- und/oder Ausstattungsstation mittels wenigstens einer Horizontalfördereinrichtung einer Gruppier- und/oder Lagenbildungsstation zugeführt, wo die Stückgüter einzeln oder zu mehreren verschoben, gedreht oder anderweitig manipuliert werden, um ihre jeweilige Position und Ausrichtung im jeweils vorgesehenen Lagenbild zu erhalten.

Die Gruppier- und/oder Lagenbildungsstation weist einen Erfassungsbereich auf, der einerseits den Raum definiert, in den die Stückgüter gebracht werden. Andererseits definiert der Erfassungsbereich einen Bewegungsraum mindestens eines Manipulators und/oder begrenzt diesen Bewegungsraum des mindestens einen Manipulators in räumlicher Hinsicht, womit in erster Linie eine Reichweite oder ein sinnvoller oder konstruktiv vorgegebener Bewegungsradius des Manipulators gemeint ist. Wenn in diesem Zusammenhang ganz allgemein von einem Manipulator die Rede ist, so kann dies insbesondere ein beweglich aufgehängter und innerhalb des definierten Bewegungsraumes steuerbarer Greifarm eines Portalroboters, eines mehrachsig bewegbaren Roboters, eines Parallelkinematik-Roboters o. dgl. sein, wobei der Greifarm insbesondere gegeneinander zustellbare Greifbacken aufweisen kann, so dass er einzelne Stückgüter, Paare oder Gruppen von Stückgütern greifen, erfassen, verschieben, anheben, drehen und in gewünschte Zielpositionen und/oder Zielausrichtungen bringen kann, um sie dort durch Öffnen der zustellbaren Greifbacken loszulassen und sich anschließend zu den nachfolgend zu manipulierenden Stückgütern zu bewegen.

Der Gruppier- und/oder Lagenbildungsstation kann wahlweise eine sich in Verlängerung der Transportrichtung der Horizontalfördereinrichtung bewegende Förderauflage zugeordnet sein, so dass der Manipulator die Stückgüter von der sich kontinuierlich in Transportrichtung bewegenden Auflagefläche entnimmt und in gewünschter Weise dreht und/oder verschiebt. Eine solche sich in Transportrichtung bewegende Auflageebene kann bspw. durch eine Mattenkette, durch eine Gliederkette oder dgl. endlos umlaufende Förderebene gebildet sein.

Ebenso möglich sind jedoch auch Varianten, bei denen dem Erfassungsbereich der Gruppier- und/oder Lagenbildungsstation keine zusätzliche Fördereinrichtung zugeordnet ist, so dass die Stückgüter mittels der Horizontalfördereinrichtung unter Staudruckwirkung auf eine relativ glatte Oberfläche der Gruppier- und/oder Lagenbildungsstation geschoben und dort zunächst ausschließlich mittels des sich in schneller Abfolge bewegenden Manipulators in das gewünschte Lagenbild gebracht werden. Da jedoch von der Gruppier- und/oder Lagenbildungsstation ein Weitertransport der solchermaßen gebildeten Stückgutlage auf nachgeordnete Verarbeitungsstationen notwendig ist, kann bei einer solchen Variante bspw. ein Überschubbalken o. dgl. eingesetzt werden, der jede fertig zusammengestellte Stückgutlage auf eine nachgeordnete Verarbeitungsstation überschiebt, was wahlweise in Verlängerung der durch die zuführende Horizontalfördereinrichtung definierte ursprüngliche Transportrichtung oder auch quer zu dieser erfolgen kann, wenn sich bspw. die der Gruppier- und/oder Lagenbildungsstation nachgeordnete Verarbeitungsstation seitlich an den Erfassungsbereich mit dem Manipulator anschließt.

Der mindestens eine Manipulator kann somit in einem Arbeitstakt mindestens ein Stückgut von der mindestens einen Reihe greifend erfassen und in eine definierte relative Zielposition und/oder Zielausrichtung verbringen, insbesondere im Hinblick auf eine zu bildende Stückgutlage. Eine solche Stückgutlage weist in aller Regel einen quadratischen oder rechteckförmigen Grundriss mit jeweils geradlinigen seitlichen Kanten sowie vorzugsweise keine oder nur geringe Abstände der solchermaßen zusammengestellten Stückgüter innerhalb des Lagenbildes. Einzelne kleinere Lücken können sich allerdings je nach Konturen der zu manipulierenden Stückgüter ergeben, wenn diese bspw. rechteckförmige Grundrisse aufweisen und das Lagenbild durch eine insgesamt unregelmäßig erscheinende Abfolge von unterschiedlich gedrehten Stückgütern zustande kommt.

Da die Bewegungssteuerungen der für den hier angestrebten Zweck der möglichst schnellen Lagenbildung verwendeten Manipulatoren sehr exakt zu erfolgen hat, ist es auch notwendig, die Stückgüter möglichst präzise in einer für die schnelle und exakte Erfassung durch den Manipulator jeweils passgenauen Position in den Bewegungsraum des Manipulators zu befördern. Deshalb hat es sich in der Praxis als notwendig erwiesen, die Stückgüter dem Manipulator möglichst ohne jegliche oder mit nur sehr geringer Lage-, Positions- und Ausrichtungsabweichung zur Verfügung zu stellen. Sofern dies nicht gewährleistet werden kann, schlägt der bekannte Stand der Technik entweder die Korrektur der Position eines schief stehenden oder verdrehten Stückgutes oder ggf. auch dessen Aussonderung vor, was andererseits jedoch eine unerwartete Lücke in der Stückgutreihe erzeugt, die unter Umständen zu Problemen bei der Bildung einer vollständigen Stückgutlage führen kann.

Um eine noch schnellere Lagenbildung zu ermöglichen, schlägt die vorliegende Erfindung einen anderen Lösungsansatz vor, der dem normalerweise nur für die Lagenbildung im engeren Sinn verantwortlichen Manipulator zusätzlich die Aufgabe zuweist, auch solche Stückgüter in seinen Lagebildungsprozess einzubeziehen, die normalerweise zuvor in ihrer Ausrichtung, Positionierung und/oder hinsichtlich anderer Abweichungen von einem Soll-Zustand zu korrigieren oder zu beeinflussen oder in bestimmten Fällen aufgrund einer zu großen Abweichung von einem Soll-Zustand oder einer Soll-Lage sogar auszusondern wären.

Um es dem Manipulator innerhalb der zur Verfügung stehenden knappen Zeit zu ermöglichen, auch solche Stückgüter zu erfassen und in seinen ununterbrochenen Lagebildungsprozess miteinzubeziehen, ist der der Gruppier- und/oder Lagenbildungsstation in Transportrichtung der Stückgüter vorgeordneten Horizontalfördereinrichtung wenigstens eine Sensoreinrichtung zur Gewinnung von Positions- und/oder Abmessungs- und/oder Ausrichtungsdaten in Bezug auf die auf der Horizontalfördereinrichtung transportierten Stückgüter zugeordnet. Hierbei ist vorgesehen, dass die Sensoreinrichtung aus den gewonnenen Positions- und/oder Abmessungs- und/oder Ausrichtungsdaten für die auf der Horizontalfördereinrichtung transportierten Stückgüter elektronische Ausgangssignale generiert. Diese Ausgangssignale werden verarbeitet und zur auf die erfassten Stückgutpositionen und/oder -abmessungen und/oder -ausrichtungen abgestimmten Ansteuerung des Manipulators verwendet, und zwar insbesondere im Hinblick auf eine jeweilige mittels des Manipulators zu bildende Stückgutlage.

Die bei dem erfindungsgemäßen Verfahren eingesetzte Sensoreinrichtung wird durch eine mechanische Abtastung gebildet. Die eingesetzte Sensoreinrichtung ist im Wesentlichen dafür geeignet, die Stückgutbreite der transportierten Stückgüter zu erkennen, indem während des Transports der Stückgüter oder bei angehaltenen Stückgütern seitliche Geländerführungen zu beiden Seiten des Transportweges der Stückgüter auf der Horizontalfördereinrichtung gegeneinander zugestellt werden, bis die Seitenflächen der Stückgüter leicht von den Geländerführungen berührt werden, was durch eine Erfassung von Drehmomenten von Stellantrieben für die verstellbaren seitlichen Geländerführungen erfolgt.

Da jedoch die Stückgüter bei einem derartigen berührenden Kontakt der gegeneinander zugestellten seitlichen Geländerführungen abgebremst würden, kann es sinnvoll sein, diese vorzugsweise bei stillstehender Horizontalfördereinrichtung gegen die Stückgüter zuzustellen und anschließend wieder zumindest um einen kleinen Weg auseinander zu bewegen, um die Stückgüter beim anschließenden Förder- und Gruppierungsvorgang ungehindert zwischen den seitlichen Geländerführungen hindurchpassieren zu lassen.

Eine nicht erfindungsgemäße Ausführungform kann vorsehen, dass eine eingesetzte Sensoreinrichtung bspw. in einer Weise ausgestaltet sein kann, dass sie die Stückgüter im Bereich der Horizontalfördereinrichtung mittels Bildverarbeitung sensieren kann. Bei dieser Verfahrensvariante kann somit eine optische Erfassungs- und/oder Sensoreinrichtung eingesetzt werden, die insbesondere mittels einer Bildverarbeitung die Stückgüter sensiert. Wahlweise kann die Sensoreinrichtung wenigstens eine Kamera und/oder wenigstens einen Zeilensensor umfassen.

Ebenso denkbar ist eine nicht erfindungsgemäße Verfahrensvariante, bei der die Sensoreinrichtung die Stückgüter im Bereich der Horizontalfördereinrichtung mittels einer Aussendung und Verarbeitung von Ultraschallsignalen sensiert. Bei dieser Verfahrensvariante kann somit eine mit Ultraschall arbeitende Erfassungs- und/oder Sensoreinrichtung eingesetzt werden, die mittels Ultraschallsignalverarbeitung die Stückgüter sensiert.

Weiterhin kann das nicht erfindungsgemäße Verfahren in einer Weise ausgestaltet sein, dass die Sensoreinrichtung wenigstens einen in den Transportweg der Stückgüter auf der Horizontalfördereinrichtung hineinragenden Reflextaster umfasst. Hierbei werden die Stückgüter im Transportweg, der dem Erfassungsbereich mit dem darin bewegbaren Manipulator vorgeordnet ist, auf mechanischem Wege abgetastet, was vorteilhafterweise mit einem Reflextaster o. dgl. Tasteinrichtung erfolgen kann.

Um der unverzichtbaren Signalverarbeitung ausreichend Zeit für die Auswertung der von der Sensoreinrichtung gewonnenen Positions-, Ausrichtungs- und/oder Zustandsdaten für die auf der Horizontalfördereinrichtung zum Erfassungsbereich der Gruppier- und/oder Lagenbildungsstation transportierten Stückgüter zu belassen, werden bei dem erfindungsgemäßen Verfahren die Sensordaten stromaufwärts der Gruppier- und/oder Lagenbildungsstation und in einem Bereich der Horizontalfördereinrichtung gewonnen, der einen ausreichenden Mindestabstand zur Gruppier- und/oder Lagenbildungsstation aufweist. Somit können bei einer ausreichend schnellen Auswertung und anschließenden Verarbeitung der Signale zuverlässige Steuervorgaben für den im Erfassungsbereich beweglichen Manipulator erzeugt werden, wobei diese Steuerbefehle für den Manipulator an die von einem Soll-Zustand ggf. abweichenden Ist-Positionen und/oder Ist-Ausrichtungen und/oder Ist-Zustände der solchermaßen mechanisch abgetasteten und sensierten Stückgüter angepasst sind. Auf diese Weise können auch schief stehende, seitlich verschobene oder sogar umgefallene Stückgüter problemlos in den Lagenbildungsprozess miteinbezogen werden, ohne dass hierfür zusätzliche Aktuatoren oder Manipulatoren notwendig wären, und ohne dass unerwünscht Ausschleusungen von einzelnen Stückgütern notwendig wären, die aufgrund ihrer Lage- oder Positionsabweichungen problemlos vom Manipulator erfasst werden können, wenn auch mit entsprechend modifizierter Positionseinstellung des Manipulators.

Bei dem Verfahrens ist vorgesehen, dass der Manipulator innerhalb seines Erfassungsbereiches in der Gruppier- und/oder Lagenbildungsstation einzelne oder mehrere Stückgüter auf Grundlage der von der Sensoreinrichtung gewonnenen und verarbeiteten und anschließend einer Steuerungseinrichtung des Manipulators zur Verfügung gestellten Sensorsignale bewegt bzw. dass der Manipulator in entsprechender Weise mitsamt den erfassten Stückgütern verfahren wird, so dass durch aufeinanderfolgende Dreh- und/oder Verschiebebewegungen weitgehend geschlossene Lagenbilder aus den Stückgütern gebildet werden, die in einem nachfolgenden Prozessschritt bspw. auf eine Palette überführt und/oder dort in mehreren Lagen übereinander geschichtet werden können.

Je nach Grad der Abweichung der Positionen, Ausrichtungen und/oder des Zustands der zu manipulierenden Stückgüter kann das Verfahren außerdem vorsehen, dass der Manipulator die Positionen einzelner oder mehrerer der auf der Horizontalfördereinrichtung zum Erfassungsbereich beförderten Stückgüter auf Grundlage der von der Sensoreinrichtung gewonnenen und verarbeiteten und einer Steuerungseinrichtung des Manipulators zur Verfügung gestellten Sensorsignale innerhalb des Erfassungsbereiches lediglich korrigiert und/oder in einer Weise verändert, so dass eine gewünschte Position des betreffenden Stückgutes im angestrebten Lagenbild erreicht wird. Bei einzelnen Stückgutpositionen kann auf ein Greifen und Verschieben und/oder Drehen durch den Manipulator verzichtet werden, wenn nämlich dem betreffenden Stückgut oder mehreren Stückgütern eine Zielposition im Lagenbild zugewiesen ist, die sich in Verlängerung des Transportweges der Horizontalfördereinrichtung befindet, so dass für dieses Stückgut oder für diese Stückgüter weder eine Drehung noch eine seitliche Verschiebung aus dem geradlinigen Transportweg heraus notwendig ist.

Bei dieser Verfahrensvariante ist eine Schiefstellung eines Stückgutes, eine seitliche Verschiebung eines Stückgutes oder ein umgefallenes Stückgut ebenso hinderlich für die Bildung einer einwandfreien Stückgutlage wie bei den zuvor beschriebenen Manipulationsvarianten, so dass auch hier ein entsprechender Korrektureingriff durch den Manipulator notwendig sein kann, der bei einwandfrei stehenden Stückgütern nicht notwendig wäre. Die Erfassung der Stückgutpositionen oder Ausrichtungen bzw. der jeweiligen Drehlage und/oder des jeweiligen Zustands der Stückgüter ermöglicht eine entsprechende Ansteuerung des Manipulators für einen solchen Korrekturzugriff und Korrektureingriff, bevor das Stückgut wieder losgelassen und seinem weiteren Transportweg überlassen wird.

Wenn allerdings durch die Auswertung der Sensorsignale erkannt wird, dass derartige Korrektureingriffe durch den Manipulator nicht zum gewünschten Erfolg führen können, weil etwa ein Stückgut stärker verformt oder beschädigt oder anderweitig für die Verwendung in der angestrebten Stückgutlage nicht mehr als geeignet erscheint, kann das erfindungsgemäße Verfahren auch dafür sorgen, dass der Manipulator einzelne oder mehrere der auf der Horizontalfördereinrichtung zum Erfassungsbereich beförderten Stückgüter auf Grundlage der von der Sensoreinrichtung gewonnenen und verarbeiteten und einer Steuerungseinrichtung des Manipulators zur Verfügung gestellten Sensorsignale innerhalb des Erfassungsbereiches entnimmt und aus dem Erfassungsbereich herausbewegt und/oder aus der weiteren Verarbeitung ausschleust. Solche entnommenen oder ausgeschleusten Stückgüter werden zweckmäßigerweise einem anderen Transportzweig oder einem anderen Verarbeitungszweig zugeführt und nicht mehr für die zu bildenden Stückgutlagen berücksichtigt.

Sinnvoll an sensorischen Abfragen im Zusammenhang mit der Stückgutförderung gemäß erfindungsgemäßem Verfahren ist bspw. ein Längs- oder Querlauf der Stückgüter. Wenn diese bspw. quaderförmig mit rechteckförmigem oder anders geformtem Grundriss und unterschiedlichen Kantenlängen ausgestaltet sind, so wird jede unerwünschte Querstellung um 90 Winkelgrade zwar möglicherweise im Förderablauf einer Vielzahl von geförderten Stückgütern unbemerkt bleiben, doch ist eine solche Querstellung dazu geeignet, den Lagenbildungsprozess erheblich zu stören, weil dieses querstehende Stückgut mit hoher Wahrscheinlichkeit nicht mehr in den für ihn vorgesehenen Platz im Lagenbild passt.

Hinzu kommt bei einer solchen Querstellung eines einzelnen Stückgutes innerhalb einer ununterbrochenen Reihe von vielen hintereinander auf der Horizontalfördereinrichtung zur Gruppier- und/oder Lagenbildungsstation geförderten Stückgütern, dass dieses einzelne querstehende Stückgut aufgrund seiner abweichenden Breite nicht mehr störungsfrei zusammen mit weiteren Stückgütern von den gegeneinander zustellbaren Greifbacken eines entsprechend ausgestatteten Manipulators gegriffen werden kann, sondern - je nach Abweichung seiner Länge oder Breite von den um 90° gedrehten benachbarten Stückgütern - bei zugestellten Greifbacken des Manipulators entweder durchrutscht, weil es schmaler ist als die benachbarten Stückgüter, oder die benachbarten Stückgüter aufgrund ihrer abweichenden Dimensionen durchrutschen lässt.

Als Abhilfe bei einem solchen um 90° gegenüber dem regulären Längslauf der vorauslaufenden und nachfolgenden Stückgüter gedrehten Stückgut kann der Manipulator in einer Weise gesteuert werden, dass er zumindest dieses einzelne verdrehte Stückgut auch einzeln erfasst und einzeln in seine Zielposition und/oder Zielausrichtung im angestrebten Lagenbild verbringt, ohne dass gleichzeitig weitere Stückgüter mit erfasst und manipuliert werden. Eine solche abweichende Manipulatorsteuerung ist zwar möglicherweise mit einem Zeitverlust verbunden, wenn etwa im normalen Ablauf zwei oder drei Stückgüter gleichzeitig erfasst und verschoben und/oder gedreht würden, doch kann dies bspw. mit einer entsprechenden Gesamtsteuerung berücksichtigt werden, bei der ausreichend Reserven für eine kurzzeitig beschleunigte Manipulatorbewegung zum Ausgleich solcher Störungen vorhanden sind. Ebenso möglich ist eine zumindest kurzzeitige Verzögerung der die Stückgüter zur Gruppier- und/oder Lagenbildungsstation fördernden Horizontalfördereinrichtung, um dem Manipulator ausreichend Zeit zu geben, um das einzelne verdrehte Stückgut einzeln in der richtigen Position im Lagenbild einzufügen. Auch eine Kombination beider Maßnahmen kann sinnvoll sein.

Weiterhin sinnvoll an sensorischen Abfragen im Zusammenhang mit der Stückgutförderung gemäß erfindungsgemäßem Verfahren ist bspw. eine Winkelstellung der Stückgüter, d.h. ihre Verdrehung um ihre jeweilige Hochachse um einen Drehwinkel zwischen Null und etwas weniger als 90 Winkelgrade. Wenn die Stückgüter bspw. quaderförmig mit rechteckförmigem oder anders geformtem Grundriss und unterschiedlichen Kantenlängen ausgebildet sind, so wird jede unerwünschte Verdrehung der Stückgüter um ihre jeweilige Hochachse zwar möglicherweise im Förderablauf einer Vielzahl von geförderten Stückgütern unbemerkt bleiben, doch ist eine solche Verdrehung dazu geeignet, den Lagenbildungsprozess erheblich zu stören, weil dieses nicht exakt mit den anderen Stückgütern fluchtende Stückgut möglicherweise nicht mehr in den für ihn vorgesehenen Platz im Lagenbild passt, sondern unter Umständen dort mit anderen Stückgütern kollidiert.

Hinzu kommt bei einer solchen Verdrehung eines einzelnen Stückgutes um seine Hochachse innerhalb einer ununterbrochenen Reihe von vielen hintereinander auf der Horizontalfördereinrichtung zur Gruppier- und/oder Lagenbildungsstation geförderten Stückgütern, dass dieses einzelne um seine Hochachse verdrehte Stückgut aufgrund seiner schräg stehenden Längsseiten nicht mehr störungsfrei zusammen mit weiteren Stückgütern von den gegeneinander zustellbaren Greifbacken eines entsprechend ausgestatteten Manipulators gegriffen werden kann, sondern - je nach Abweichung seiner Ausrichtung von den mit ihren jeweiligen Längsseiten miteinander fluchtenden benachbarten Stückgütern - bei zugestellten Greifbacken des Manipulators entweder in die fluchtende Lage mit anderen Stückgütern gedrückt wird, weil die Greifbacken es bei der Zustellbewegung in die vorgesehene Lage drehen. Allerdings können hierbei die jeweils benachbarten Stückgüter leicht auseinander geschoben werden, weil die Seitenkanten des beim Zustellen der Greifbacken des Manipulators verdrehten Stückguts einem Kreissegment folgen und hierbei mehr Platz benötigen als ein exakt mit den benachbarten Stückgütern fluchtendes Stückgut.

Als Abhilfe bei einem solchen um mehr als 0° und weniger als 90° gegenüber dem regulären Längslauf der vorauslaufenden und nachfolgenden Stückgüter um seine Hochachse verdrehten Stückgut kann der Manipulator in einer Weise gesteuert werden, dass er zumindest dieses einzelne verdrehte Stückgut auch einzeln erfasst und einzeln in seine Zielposition und/oder Zielausrichtung im angestrebten Lagenbild verbringt, ohne dass gleichzeitig weitere Stückgüter mit erfasst und manipuliert werden. Eine solche abweichende Manipulatorsteuerung ist zwar möglicherweise mit einem Zeitverlust verbunden, wenn etwa im normalen Ablauf zwei oder drei Stückgüter gleichzeitig erfasst und verschoben und/oder gedreht würden, doch kann dies bspw. mit einer entsprechend angepassten Gesamtsteuerung berücksichtigt werden, bei der ausreichend Reserven für eine kurzzeitig beschleunigte Manipulatorbewegung zum Ausgleich solcher Störungen vorhanden sind.

Ebenso möglich ist eine zumindest kurzzeitige Verzögerung der die Stückgüter zur Gruppier- und/oder Lagenbildungsstation fördernden Horizontalfördereinrichtung, um dem Manipulator ausreichend Zeit zu geben, um das einzelne verdrehte Stückgut zurückzudrehen oder weniger als 90° weiterzudrehen und einzeln in der richtigen Position im Lagenbild einzufügen. Auch eine Kombination der beiden genannten Maßnahmen kann sinnvoll sein.

Eine weitere sinnvolle sensorische Abfrage im Zusammenhang mit der Stückgutförderung kann bspw. eine Höhe und/oder Breite und/oder Größe und/oder allgemein ein Volumen der Stückgüter erfassen, d.h. eine möglicherweise vorhandene Abweichung einer tatsächlichen Dimension einzelner oder mehrerer Stückgüter von einer Soll-Dimension. Wenn die Stückgüter bspw. quaderförmig mit rechteckförmigem oder anders geformtem Grundriss und unterschiedlichen Kantenlängen ausgebildet sind, so wird jede unerwünschte Höhen- und/oder Breitenabweichung von einer Soll-Dimension zwar möglicherweise im Förderablauf einer Vielzahl von geförderten Stückgütern unbemerkt bleiben, doch ist eine solche Abweichung potentiell dazu geeignet, den Lagenbildungsprozess erheblich zu stören, weil das einzelne nicht exakt mit den anderen Stückgütern übereinstimmende und/oder fluchtende Stückgut möglicherweise nicht mehr in den für ihn vorgesehenen Platz im Lagenbild passt, sondern unter Umständen dort mit anderen Stückgütern kollidiert.

Hinzu kommt bei einer solchen Abweichung in der Dimensionierung eines einzelnen Stückgutes, bspw. in seiner Höhe und/oder in seiner Breite, innerhalb einer ununterbrochenen Reihe von vielen hintereinander auf der Horizontalfördereinrichtung zur Gruppier- und/oder Lagenbildungsstation geförderten Stückgütern, dass dieses einzelne breitere oder schmalere bzw. höhere oder niedrigere Stückgut aufgrund seiner nicht exakt mit benachbarten Stückgütern fluchtenden Längsseiten nicht mehr störungsfrei zusammen mit weiteren Stückgütern von den gegeneinander zustellbaren Greifbacken eines entsprechend ausgestatteten Manipulators gegriffen werden kann, sondern - je nach Abweichung seiner Breite von den mit ihren jeweiligen Längsseiten miteinander fluchtenden benachbarten Stückgütern - bei zugestellten Greifbacken des Manipulators entweder in die fluchtende Lage mit anderen Stückgütern gedrückt und dabei zusammengedrückt wird wird, weil die Greifbacken bei ihrer Zustellbewegung von einem schmaleren Stückgut ausgehen. Allerdings können hierbei die jeweils benachbarten Stückgüter leicht nach unten durchrutschen und nicht mit ausreichender Zuverlässigkeit erfasst werden, etwa weil ihre Seitenkanten beim Zustellen der Greifbacken des Manipulators weiter von den Greifbacken beabstandet bleiben als das breitere Stückgut. Umgekehrt gilt entsprechendes für ein schmaleres Stückgut, das bei einem gemeinsamen Greifvorgang mit benachbarten breiteren Stückgütern leicht nach unten aus den gegeneinander zugestellten Greifbacken herausrutschen kann.

Als Abhilfe bei einem solchen in seinen Dimensionen von vorauslaufenden und nachfolgenden Stückgüter abweichenden Stückgut kann der Manipulator in einer Weise gesteuert werden, dass er zumindest dieses einzelne Stückgut, das anders dimensioniert ist, auch einzeln erfasst und einzeln in seine Zielposition und/oder Zielausrichtung im angestrebten Lagenbild verbringt, ohne dass gleichzeitig weitere Stückgüter mit erfasst und manipuliert werden. Eine solche abweichende Manipulatorsteuerung ist zwar möglicherweise mit einem Zeitverlust verbunden, wenn etwa im normalen Ablauf zwei oder drei Stückgüter gleichzeitig erfasst und verschoben und/oder gedreht würden, doch kann dies bspw. mit einer entsprechend angepassten Gesamtsteuerung berücksichtigt werden, bei der ausreichend Reserven für eine kurzzeitig beschleunigte Manipulatorbewegung zum Ausgleich solcher Störungen vorhanden sind.

Je nach Klassifizierung der abweichenden Dimensionierung einzelner Stückgüter kann es auch sinnvoll sein, diese auszuschleusen und durch entsprechende Manipulatorsteuerungen und Manipulatorbewegungen aus dem Lagenbildungsprozess auszusondern und bspw. einem Sammelbehälter oder einer abfördernden Transporteinrichtung wie einer abfördernden Horizontalfördereinrichtung zuzuführen. Auf diese Weise können solche ausgesonderten Stückgüter wahlweise weiteren Behandlungs- und/oder Handhabungsschritten zugeführt werden, die hier nicht näher erläutert werden müssen.

Zusätzlich zu einer angepassten Manipulatorsteuerung kann eine zumindest kurzzeitige Verzögerung der die Stückgüter zur Gruppier- und/oder Lagenbildungsstation fördernden Horizontalfördereinrichtung sinnvoll sein, um dem Manipulator ausreichend Zeit zu geben, um das einzelne Stückgut separat zu erfassen und einzeln in der richtigen Position im Lagenbild einzufügen oder aus dem Lagenbildungsprozess auszuschleusen. Auch eine Kombination der beiden genannten Maßnahmen kann sinnvoll sein.

Der Gruppierungs- und/oder Lagenbildungsvorgang, bei dem der Manipulator eindeutige Informationen zumindest über eine Breite der zu handhabenden Stückgüter erhält, kann auf die oben beschriebene Weise ablaufen. Normalerweise wird aber der weitere Gruppierungs- und/oder Lagenbildungsvorgang vorzugsweise mit Stückgütern einheitlicher Größe sowie jeweils gleicher Ausrichtung erfolgen, da eine mechanische Abtastung nach dem Initialisierungsvorgang nicht in der Lage ist, verdrehte, beschädigte oder abweichend dimensionierte Stückgüter zu erkennen und dem Manipulator entsprechende Steuerbefehle zu liefern, um solche Abweichungen beim Lagenbildungsprozess zu berücksichtigen und auszugleichen.

Ein Sonderfall eines in seinen Dimensionierungen von anderen Stückgütern abweichenden Stückgutes kann ein umgefallenes Stückgut sein, das auf der Horizontalfördereinrichtung zwischen vorauslaufenden aufrecht stehenden und nachfolgenden aufrecht stehenden Stückgütern in längs, quer oder verdrehter liegender Lage befördert wird und dem Manipulator beim Lagenbildungsprozess möglicherweise eine schwierigere oder sogar nicht zu bewältigende Aufgabe bereitet. Wahlweise kann die sensorische Abfrage von umgefallenen Stückgütern bei dem erfindungsgemäßen Verfahren als Sonderfall einer Erfassung einer Höhe und/oder Breite und/oder Größe und/oder allgemein eines Volumen der Stückgüter angesehen werden, weil auch ein umgefallenes Stückgut eine Abweichung einer tatsächlichen Dimension von einer Soll-Dimension zeigt. Insbesondere bei umgefallenen Stückgütern ist eine solche Abweichung von einer Soll-Dimension potentiell dazu geeignet, den Lagenbildungsprozess erheblich zu stören, weil das umgefallene Stückgut in aller Regel nicht in den für ihn vorgesehenen Platz im Lagenbild passt, sondern mit hoher Wahrscheinlichkeit dort mit anderen Stückgütern kollidiert.

Bei umgefallenen Stückgütern ist daher zu entscheiden, ob diese ohne weitere Prüfung direkt auszusondern, d.h. aus dem Förderprozess auszuschleusen sind, ohne dass sie überhaupt dem Lagenbildungsprozess zugeführt werden. Allerdings kann es je nach Größe und Gestalt der in eine stapelbare Lage zu bringenden Stückgüter ggf. sinnvoll sein, auch umgefallene Stückgüter in der oben beschriebenen Weise zu handhaben, d.h. vom Manipulator erst aufrichten zu lassen, um sie dann in der ursprünglich vorgesehenen Weise dem Lagenbildungsprozess einzugliedern.

Sofern ein umgefallenes Stückgut nicht ausgeschleust werden soll, kann der Manipulator in einer Weise gesteuert werden, dass er zumindest dieses einzelne Stückgut einzeln erfasst, aufrichtet und anschließend einzeln in seine Zielposition und/oder Zielausrichtung im angestrebten Lagenbild verbringt, ohne dass gleichzeitig weitere Stückgüter mit erfasst und manipuliert werden. Eine solche abweichende Manipulatorsteuerung ist zwar möglicherweise mit einem Zeitverlust verbunden, wenn etwa im normalen Ablauf zwei oder drei Stückgüter gleichzeitig erfasst und verschoben und/oder gedreht würden, doch kann dies bspw. mit einer entsprechend angepassten Gesamtsteuerung berücksichtigt werden, bei der ausreichend Reserven für eine kurzzeitig beschleunigte Manipulatorbewegung zum Ausgleich solcher Störungen vorhanden sind.

Neben der erwähnten angepassten Manipulatorsteuerung kann eine zumindest kurzzeitige Verzögerung der die Stückgüter zur Gruppier- und/oder Lagenbildungsstation fördernden Horizontalfördereinrichtung sinnvoll sein, um dem Manipulator ausreichend Zeit zu geben, um das einzelne Stückgut separat zu erfassen und einzeln in der richtigen Position im Lagenbild einzufügen oder aus dem Lagenbildungsprozess auszuschleusen. Auch eine Kombination der beiden genannten Maßnahmen kann sinnvoll sein.

Ein weiterer mechanischer Parameter der Stückgüter, der mittels der Sensoreinrichtung abgefragt werden kann, ist die Formstabilität und/oder äußere Festigkeit der Stückgüter, was sich insbesondere mit einer Sensoreinrichtung abfragen lässt, die einen mechanischen Taster o. dgl. umfasst, dessen Tastglied etwa die Nachgiebigkeit der äußeren Stückgutverpackung bei Aufbringung einer definierten Druckkraft auf eine Seitenfläche des die Sensoreinrichtung jeweils passierenden Stückgutes messen kann.

Da die in eine Lagenanordnung zu bringenden Stückgüter bspw. durch relativ dünnwandige Flüssigkeitsbehälter wie etwa durch PET-Getränkebehälter oder durch quaderförmige Mehrstoffverpackungen mit biegeweicher Außenhülle gebildet sein können, kann eine nachgiebige Verpackungshülle ein Indiz für eine nicht ordnungsgemäße Befüllung, für eine Beschädigung der Verpackung oder auch für eine nicht vollständig befüllte Verpackung darstellen. Da sich eine solche Verpackung deutlich leichter eindrücken lässt als ein ordnungsgemäß befüllter Flüssigkeits- oder Getränkebehälter, lässt sich mit einer entsprechend konfigurierten Sensoreinrichtung mit mechanisch mit einer Außenwand der Verpackung wechselwirkenden mechanischem Tastglied eine schadhafte Verpackung oder ein nicht ordnungsgemäß befüllter Behälter identifizieren und vorzugsweise aus dem weiteren Förder- und/oder Lagenbildungsprozess ausschleusen.

Eine solche Ausschleusung wird in aller Regel einer Einfügung in die angestrebte Lagenanordnung vorzuziehen sein, da solche als schadhaft oder mängelbehaftet identifizierte Behälter oder Verpackungen nicht während des Lagenbildungsprozesses in einen einwandfreien Zustand gebracht werden können, wie dies etwa mit schief stehenden oder umgefallenen Behältern oder Stückgütern der Fall ist.

Außerdem kann eine sinnvolle Einsatzmöglichkeit der Sensoreinrichtung in der Abfrage der jeweils auf der Horizontalfördereinrichtung zur Gruppier- und/oder Lagenbildungsstation beförderten Sorte der Stückgüter bestehen, da die Stückgüter oftmals mit äußeren Kennzeichnungen wie Barcodes, QR-Codes o.ä. versehen sind, die als Träger zahlreicher Informationen dienen können, u.a. von Informationen über verschiedene Stückgutvarianten oder Sorten von als Stückgütern beförderten Getränkebehältern.

Da es bei vielen Lagenbildungsprozessen wünschenswert ist, sog. gemischte Lagen durch Zusammenstellung verschiedener Stückgutsorten in jeweils definierbaren Mischverhältnissen herzustellen, kann eine Abfrage der jeweils auf der Horizontalfördereinrichtung zugeführten Stückgutsorte zur entsprechenden Steuerung des Manipulators verwendet werden, so dass dieser wahlweise die verschiedenen Sorten an die jeweils vorgesehenen Zielpositionen im Lagenbild verbringt oder dass nicht für eine jeweilige Lage vorgesehene Stückgutsorte ausgesondert oder einer benachbarten Gruppier- und/oder Lagenbildungsstation zugeführt werden.

Weitere Einsatzmöglichkeiten sind im Zusammenhang mit der Abfrage von codierten Informationen auf den Stückgutverpackungen denkbar.

Zur Erreichung der oben definierten Ziele schlägt die vorliegende Erfindung neben dem in verschiedenen Ausführungsvarianten erläuterten Verfahren weiterhin eine Handhabungs- und/oder Lagenbildungsvorrichtung nach Anspruch 5 vor, die wenigstens eine Horizontalfördereinrichtung zur reihenweisen Beförderung von gleichmäßig oder unterschiedlich voneinander beabstandeten Stückgütern von einer Verpackungs- und/oder Ausstattungsstation zu einer einen Erfassungsbereich aufweisenden Gruppier- und/oder Lagenbildungsstation umfasst. Der Erfassungsbereich definiert einen Bewegungsraum mindestens eines Manipulators und/oder begrenzt diesen in räumlicher Hinsicht. Der sich innerhalb des Bewegungsraumes bewegende mindestens eine Manipulator ist in einer Weise ausgestattet und ausgebildet, dass er in einem Arbeitstakt mindestens ein Stückgut von der mindestens einen zugeführten Reihe greifend erfassen und in eine definierte relative Zielposition und/oder Zielausrichtung verbringen kann, insbesondere im Hinblick auf eine zu bildende Stückgutlage aus einer definierten Anzahl von Stückgütern.

Wie dies weiter oben im Zusammenhang mit der Erläuterung des erfindungsgemäßen Verfahrens bereits beschrieben wurde, definiert der hier so genannte Erfassungsbereich der Gruppier- und/oder Lagenbildungsstation nicht nur den Raum, in den die Stückgüter gebracht werden, sondern bildet gleichzeitig auch einen Bewegungsraum für den mindestens einen Manipulator und/oder begrenzt diesen Bewegungsraum des mindestens einen Manipulators in räumlicher Hinsicht. Mit dieser räumlichen Begrenzung ist insbesondere eine Reichweite oder ein sinnvoller oder konstruktiv vorgegebener Bewegungsradius des Manipulators gemeint, den dieser aufgrund seiner baulichen Gegebenheiten nicht überschreiben oder verlassen kann, weil etwa sein beweglicher Arm nicht über diesen Raum hinausgreifen kann.

Im Zusammenhang mit der vorliegenden Erfindungsbeschreibung ist zudem ganz allgemein von einem Manipulator die Rede. Mit diesem hier durchgängig verwendeten Begriff des Manipulators kann insbesondere ein beweglich aufgehängter und innerhalb des definierten Bewegungsraumes steuerbarer Greifarm eines Portalroboters, eines mehrachsig bewegbaren Roboters, eines Parallelkinematik-Roboters o. dgl. gemeint sein, wobei der Greifarm insbesondere gegeneinander zustellbare Greifbacken aufweisen kann, so dass er einzelne Stückgüter, Paare oder Gruppen von Stückgütern greifen, erfassen, verschieben, anheben, drehen und in gewünschte Zielpositionen und/oder Zielausrichtungen bringen kann, um sie dort durch Öffnen der zustellbaren Greifbacken loszulassen und sich anschließend zu den nachfolgend zu manipulierenden Stückgütern zu bewegen.

Bei der erfindungsgemäßen Handhabungs- und/oder Lagenbildungsvorrichtung ist zudem vorgesehen, dass die der Gruppier- und/oder Lagenbildungsstation in Transportrichtung der Stückgüter vorgeordnete Horizontalfördereinrichtung wenigstens eine Sensoreinrichtung zur Gewinnung von Positions- und/oder Abmessungs- und/oder Ausrichtungsdaten in Bezug auf die auf der Horizontalfördereinrichtung transportierten Stückgüter aufweist.

Außerdem ist vorgesehen, dass die Sensoreinrichtung aus den gewonnenen Positions- und/oder Abmessungs- und/oder Ausrichtungsdaten für die auf der Horizontalfördereinrichtung transportierten Stückgüter elektronische Ausgangssignale generiert und an eine Steuerungseinrichtung liefert, wo die elektronischen Ausgangssignale verarbeitet werden. Die Steuerungseinrichtung ist in einer Weise ausgebildet und ausgestattet, dass sie die Bewegungen des Manipulators innerhalb des Bewegungsraumes zum Zwecke der Lagenbildung aus den mittels der Horizontalfördereinrichtung der Gruppier- und/oder Lagenbildungsstation zugeführten Stückgütern steuert.

Die Anordnung der Sensoreinrichtung im Bereich der Horizontalfördereinrichtung, auf der die Stückgüter reihenweise zum Erfassungsbereich der Gruppier- und/oder Lagenbildungsstation transportiert werden, ermöglicht die rechtzeitige Erkennung von solchen Stückgütern, die möglicherweise den ordnungsgemäß ablaufenden Lagenbildungsprozess stören oder verhindern könnten, sei es wegen einer Schiefstellung einzelner Stückgüter, wegen umgefallener oder in ihrer äußeren Kontur abweichender Stückgüter oder wegen anderer Abweichungen von einem Norm- oder Sollzustand. Der Zeitraum, den die Stückgüter auf ihrem Förderweg zwischen der Sensoreinrichtung und dem im Erfassungsbereich agierenden Manipulator benötigen, reicht aus, um die Manipulatorsteuerung bedarfsweise an die erfasste Normabweichung anzupassen und das Stückgut entweder entsprechend seiner Schiefstellung, Verdrehung, seines Liegezustandes (umgefallenes Stückgut) etc. gesondert zu erfassen, oder um das nicht mehr in den Lagenbildungsprozess integrierbare Stückgut aus dem gesamten Prozess auszuschleusen und es somit einer separaten Behandlung zu unterziehen.

Grundsätzlich eignen sich als Sensoreinrichtungen zahlreiche technische Ausführungsvarianten, etwa solche, die mit elektromagnetischer Strahlung und einer Erfassung von reflektierten Strahlungsanteilen arbeiten. Ebenso kann die eingesetzte Sensorik auf einer Bildverarbeitung im weitesten Sinne basieren, wobei der Begriff der Bildverarbeitung weit verstanden sein soll und nicht nur elektromagnetische Strahlung im für das menschliche Auge sichtbaren Bereich umfassen kann, sondern wahlweise auch nicht sichtbare Strahlungsanteile wie infrarote und/oder ultraviolette Strahlung. Begrifflich kann darüber hinaus auch elektromagnetische Strahlung im Ultraschallbereich als für die Bildverarbeitung geeignete Strahlung angesehen werden, da eine hierfür ausgestattete Sensorik aus der Erfassung von Ultraschallwellen, die von den Stückgütern reflektiert werden, in gleicher Weise Raum- und Positionsdaten ableiten kann wie aus Strahlung im sichtbaren Wellenlängenbereich.

So kann etwa die Sensoreinrichtung bei einer nicht erfindungsgemäßen Vorrichtung durch eine optische Erfassungs- und/oder Sensoreinrichtung gebildet sein, die mittels Bildverarbeitung die auf der Horizontalfördereinrichtung beförderten und die Sensoreinrichtung passierenden Stückgüter sensiert. Wahlweise kann diese optische Sensoreinrichtung wenigstens eine Kamera und/oder wenigstens einen Zeilensensor umfassen.

Bei einer alternativen nicht erfindungsgemäßen Vorrichtung kann die Sensoreinrichtung wahlweise auch durch eine mit Ultraschall arbeitende Erfassungs- und/oder Sensoreinrichtung gebildet sein, die mittels Ultraschallsignalverarbeitung die auf der Horizontalfördereinrichtung beförderten und die Sensoreinrichtung passierenden Stückgüter sensiert.

Bei der erfindungsgemäßen Vorrichtung tastet die Sensoreinrichtung jedoch auf mechanischem Wege die Stückgüter ab. So kann eine nicht erfindungsgemäße Sensoreinrichtung wenigstens einen in den Transportweg der Stückgüter auf der Horizontalfördereinrichtung hineinragenden Reflextaster umfassen, so dass der Reflextaster die auf der Horizontalfördereinrichtung beförderten und die Sensoreinrichtung passierenden Stückgüter erfassen und sensieren kann.

Die erfindungsgemäße Sensoreinrichtung soll im Wesentlichen eine Stückgutbreite erkennen, indem während des Transports der Stückgüter oder bei einem zumindest kurzzeitigen Stillstand der Stückgüter seitliche Geländerführungen zu beiden Seiten des Transportweges der Stückgüter auf der Horizontalfördereinrichtung gegeneinander zugestellt werden, bis die Seitenflächen der Stückgüter von den Geländerführungen erreicht und leicht berührt werden, was durch eine Erfassung von Drehmomenten von Stellantrieben für die verstellbaren seitlichen Geländerführungen erfolgt.

Da die Stückgüter bei berührendem Kontakt der gegeneinander zugestellten seitlichen Geländerführungen abgebremst würden, werden diese vorzugsweise bei stillstehender Horizontalfördereinrichtung zugestellt und anschließend wieder zumindest um einen kleinen Weg auseinander bewegt, um die Stückgüter beim anschließenden Förder- und Gruppierungsvorgang ungehindert zwischen den seitlichen Geländerführungen hindurchpassieren zu lassen.

Der weitere Gruppierungs- und/oder Lagenbildungsvorgang kann auf die oben beschriebene Weise ablaufen, wird aber vorzugsweise mit Stückgütern einheitlicher Größe sowie jeweils gleicher Ausrichtung erfolgen, da die hier eingesetzte mechanische Abtastung nach dem Initialisierungsvorgang nicht in der Lage ist, verdrehte, beschädigte oder abweichend dimensionierte Stückgüter zu erkennen und dem Manipulator entsprechende Steuerbefehle zu liefern, um solche Abweichungen beim Lagenbildungsprozess zu berücksichtigen und auszugleichen.

Um der Steuerungseinrichtung ausreichend Zeit zur Verarbeitung der von der Sensoreinrichtung gelieferten Ausgangssignale zu geben und in dieser Zeit angepasste Steuerungsbefehle für den Manipulator zu generieren, ist die Sensoreinrichtung stromaufwärts eines Übergangsbereichs von der Horizontalfördereinrichtung zur Gruppier- und/oder Lagenbildungsstation angeordnet, und zwar sinnvollerweise in einer ausreichenden Entfernung, um bei normaler Transportgeschwindigkeit der Stückgüter eine ausreichende Zeit für die Signalverarbeitung zur Verfügung zu behalten.

Bei der Vorrichtung ist vorgesehen, dass der Manipulator einzelne oder mehrere Stückgüter auf Grundlage der von der Sensoreinrichtung gewonnen und verarbeiteten und einer Steuerungseinrichtung des Manipulators zur Verfügung gestellten Sensorsignale innerhalb des Erfassungsbereiches bewegt bzw. verfährt, so dass Positionsabweichungen einzelner Stückgüter rechtzeitig erkannt und für angepasste Manipulatorbewegungen berücksichtigt werden können.

Auf diese Weise kann der Manipulator die Positionen einzelner oder mehrerer der auf der Horizontalfördereinrichtung zum Erfassungsbereich beförderten Stückgüter auf Grundlage der von der Sensoreinrichtung gewonnen und verarbeiteten und einer Steuerungseinrichtung des Manipulators zur Verfügung gestellten Sensorsignale innerhalb des Erfassungsbereiches korrigieren und/oder verändern.

Wahlweise kann die Vorrichtung auch in einer Weise ausgestattet sein, dass die Steuerungseinrichtung für die Bewegungssteuerung des Manipulators mit einer steuerbaren Ausschleuseinrichtung gekoppelt ist. Hierdurch können bedarfsweise einzelne oder mehrere der auf der Horizontalfördereinrichtung zum Erfassungsbereich beförderten Stückgüter auf Grundlage der von der Sensoreinrichtung gewonnen und verarbeiteten und einer Steuerungseinrichtung des Manipulators zur Verfügung gestellten Sensorsignale innerhalb des Erfassungsbereiches entnommen und aus dem Erfassungsbereich herausbewegt und/oder aus der weiteren Verarbeitung ausschleust werden.

Es sei an dieser Stelle ausdrücklich erwähnt, dass alle Aspekte und Ausführungsvarianten, die im Zusammenhang mit der erfindungsgemäßen Handhabungs- und/oder Lagenbildungsvorrichtung erläutert wurden, gleichermaßen Teilaspekte des erfindungsgemäßen Verfahrens zum Umgang mit und/oder zur Handhabung von in mindestens einer Reihe bewegten Stückgütern betreffen oder bilden können. Wenn daher an einer Stelle bei der Beschreibung oder auch bei den Anspruchsdefinitionen zur erfindungsgemäßen Handhabungs- und/oder Lagenbildungsvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zum Umgang mit und/oder zur Handhabung von in mindestens einer Reihe bewegten Stückgütern erläutert wurden, gleichermaßen Teilaspekte der erfindungsgemäßen Handhabungs- und/oder Lagenbildungsvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Handhabungs- und/oder Lagenbildungsvorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt in zwei schematischen Draufsichten (Fig. 1A und Fig. 1B) eine erste Ausführungsvariante einer nicht erfindungsgemäßen Handhabungs- und/oder Lagenbildungsvorrichtung zur Handhabung von Stückgütern und zur Ausbildung von stapelbaren Stückgutlagen.

Fig. 2 zeigt in zwei schematischen Draufsichten (Fig. 2A und Fig. 2B) eine zweite Ausführungsvariante einer nicht erfindungsgemäßen Handhabungs- und/oder Lagenbildungsvorrichtung zur Handhabung von Stückgütern und zur Ausbildung von stapelbaren Stückgutlagen.

Fig. 3 zeigt in einer schematischen Draufsicht eine Ausführungsvariante der erfindungsgemäßen Handhabungs- und/oder Lagenbildungsvorrichtung zur Handhabung von Stückgütern und zur Ausbildung von stapelbaren Stückgutlagen.

Fig. 4 zeigt in zwei schematischen Draufsichten (Fig. 4A und Fig. 4B) eine dritte Ausführungsvariante einer nicht erfindungsgemäßen Handhabungs- und/oder Lagenbildungsvorrichtung zur Handhabung von Stückgütern und zur Ausbildung von stapelbaren Stückgutlagen.

Fig. 5 zeigt in einer weiteren schematischen Draufsicht eine vierte Ausführungsvariante einer nicht erfindungsgemäßen Handhabungs- und/oder Lagenbildungsvorrichtung zur Handhabung von Stückgütern und zur Ausbildung von stapelbaren Stückgutlagen.

Für gleiche oder gleich wirkende Elemente der Erfindung werden in den nachfolgend beschriebenen Figuren identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Der Schutzbereich der Erfindung wird durch die Ansprüche bestimmt.

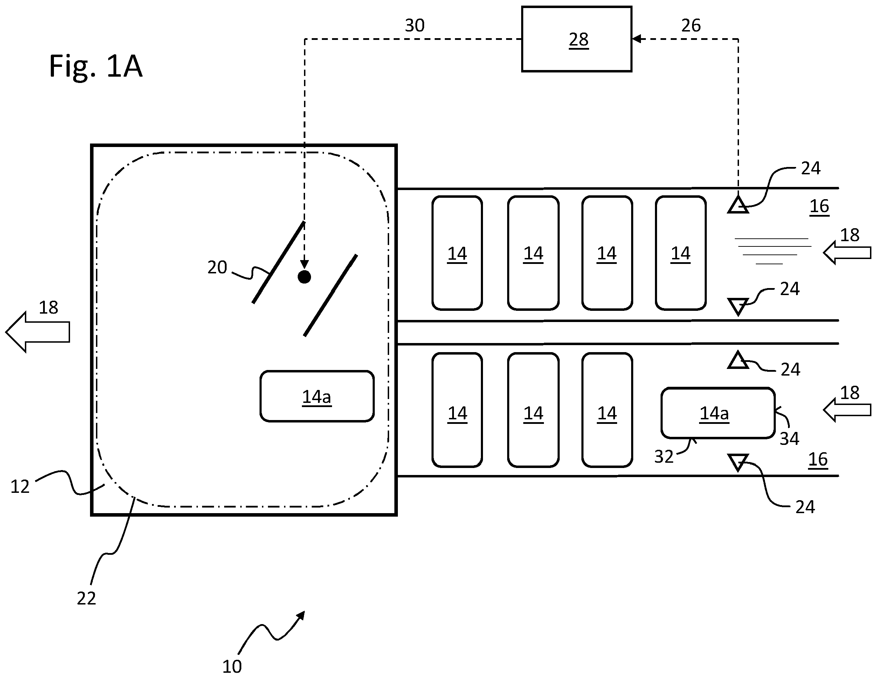

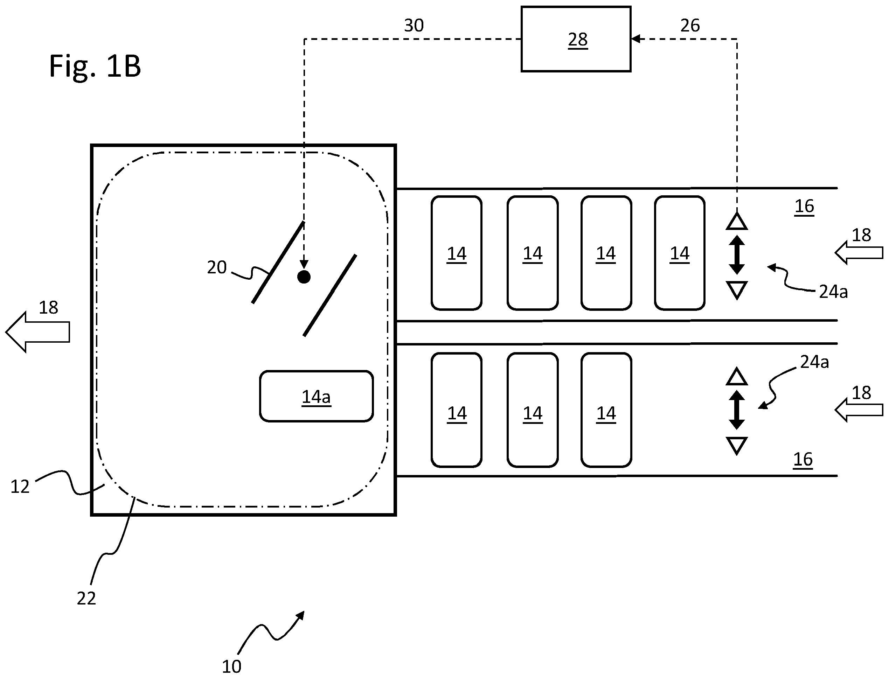

Die schematische Draufsichten der Figuren 1A und 1B zeigen eine erste Ausführungsvariante einer Handhabungs- und/oder Lagenbildungsvorrichtung 10, die eine hier durch ein großes Rechteck zeichnerisch angedeutete Gruppier- und/oder Lagenbildungsstation 12 aufweist, in der Stückgüter 14, die mittels zweier parallel angeordneter Horizontalfördereinrichtungen 16 in einer Transportrichtung 18 zur Gruppier- und/oder Lagenbildungsstation 12 befördert werden, mittels eines hier lediglich schematisch angedeuteten Manipulators 20 in eine Lagenanordnung gebracht werden, so dass die solchermaßen gebildeten Stückgutlagen anschließend in Transportrichtung 18 von der Station 12 wegbefördert und mehrfach übereinandergestapelt werden können (hier nicht dargestellt).

Die Stückgüter 14 werden auf den beiden parallel verlaufenden und auch in paralleler Richtung 18 fördernden Horizontalfördereinrichtungen 16, die zudem einen geringen Abstand zueinander aufweisen können, jeweils in regelmäßiger Abfolge mit Lücken zwischen aufeinanderfolgenden Stückgütern 14 befördert. Wahlweise können die mittels der Horizontalfördereinrichtungen 16 bewegten Stückgüter 14 in jeder Reihe jeweils ungefähr gleiche oder auch unterschiedliche Abstände voneinander aufweisen. Die Stückgüter 14 können wahlweise jedoch im Förderverlauf auch variable Abstände voneinander aufweisen.

Die Stückgüter 14 - dies können etwa Gebinde der unterschiedlichsten Art sein - können bspw. zuvor in einer Verpackungs- und/oder Ausstattungsstation verpackt worden und/oder bedruckt worden sein, bevor sie mittels der beiden parallelen Horizontalfördereinrichtungen 16 der einen Erfassungsbereich 22 aufweisenden Gruppier- und/oder Lagenbildungsstation 12 zugeführt werden. Der hier durch eine unterbrochene Linierung innerhalb der Station 12 gekennzeichnete Erfassungsbereich 22 definiert einen Bewegungsraum des Manipulators 20 und charakterisiert gleichzeitig dessen räumlich begrenzte Reichweite, womit gemeint ist, dass der Manipulator 20 nur solche Stückgüter 14 erreichen und ergreifen kann, die sich innerhalb des Bewegungsraumes des Erfassungsbereiches 22 befinden.

Der Manipulator 20 wird in einer Weise gesteuert, dass er in einem Arbeitstakt mindestens ein Stückgut 14 von einer der beiden parallel zugeführten Reihen greifend erfasst und in eine definierte relative Zielposition und/oder Zielausrichtung verbringt, insbesondere im Hinblick auf die jeweils zu bildende Stückgutlage.

Die Fig. 1A sowie auch die Fig. 1B lassen erkennen, dass beiden der der Gruppier- und/oder Lagenbildungsstation 12 in Transportrichtung 18 der Stückgüter 14 vorgeordneten Horizontalfördereinrichtungen 16 jeweils eine eigene Sensoreinrichtung 24 zur Gewinnung von Positions- und/oder Abmessungs- und/oder Ausrichtungsdaten in Bezug auf die auf den Horizontalfördereinrichtungen 16 transportierten Stückgüter 14 zugeordnet ist. Die Sensoreinrichtungen 24 generieren aus den jeweils gewonnenen Positions- und/oder Abmessungs- und/oder Ausrichtungsdaten für die auf der Horizontalfördereinrichtung 16 transportierten Stückgüter 14 elektronische Ausgangssignale 26. Diese Ausgangssignale 26 werden verarbeitet und zur auf die erfassten Stückgutpositionen und/oder -abmessungen und/oder -ausrichtungen abgestimmten Ansteuerung des Manipulators 20 verwendet, und zwar im Hinblick auf eine jeweilige mittels des Manipulators 20 zu bildende Stückgutlage (hier nicht dargestellt).

Diese jeweils den beiden Horizontalfördereinrichtungen 16 zugeordneten Sensoreinrichtungen 24 können gemäß dem in Fig. 1A und Fig. 1B gezeigten Ausführungsbeispiel der nicht erfinungsgemäßen Handhabungs- und/oder Lagenbildungsvorrichtung grundsätzlich nach den unterschiedlichsten Messprinzipien arbeiten wobei insbesondere solche Messprinzipien sinnvoll eingesetzt werden können, die auf der Aussendung und dem Empfang von optischen oder generell von elektromagnetischen Wellen basieren. Denkbar ist auch eine mechanische oder anderweitige Gewinnung von Positions- und/oder Abmessungs- und/oder Ausrichtungsdaten der auf der jeweiligen Horizontalfördereinrichtung 16 transportierten Stückgüter 14, etwa der Einsatz von Tastgliedern o. dgl.

Um aus der sensorischen Abfrage der Stückgutausrichtungen und/oder der Stückgutpositionen sinnvolle Steuerbefehle für den stromabwärts der Horizontalfördereinrichtungen 16 positionierten Manipulator 20 gewinnen zu können, generieren die Sensoreinrichtungen 24 aus den gewonnenen Positions- und/oder Abmessungs- und/oder Ausrichtungsdaten für die auf den Horizontalfördereinrichtungen 16 transportierten Stückgüter 14 jeweils elektronische Ausgangssignale 26, die in einer hier allgemein bezeichneten Steuerungseinrichtung 28 verarbeitet werden. Die Steuerungseinrichtung 28 kann somit angepasste Steuerbefehle 30 für den Manipulator 20 erzeugen, so dass dieser die jeweils betroffenen Stückgüter 14 in an das angestrebte Lagenbild angepasster Weise innerhalb des Erfassungsbereiches 22 bewegen und/oder drehen und/oder verschieben kann.

Wie es die schematischen Draufsichten der Figuren 1A und Fig. 1B verdeutlichen, können die den beiden Horizontalfördereinrichtungen 16 jeweils zugeordneten Sensoreinrichtungen 24 zumindest eine Verdrehung der Stückgüter 14 um 90° erkennen. Werden etwa quaderförmige Stückgüter 14 mit rechteckförmigem Grundriss in Transportrichtung 18 befördert, wobei ihre jeweiligen Längsseiten 32 zueinander weisen, so dass ihre jeweiligen Schmalseiten 34 miteinander fluchten und parallel zur Transportrichtung 18 und zu den Längserstreckungsrichtungen der jeweiligen Horizontalfördereinrichtungen 16 angeordnet sind, so weisen bei einem um 90° verdrehten Stückgut 14a, wie es auf der unteren Horizontalfördereinrichtung 16 erkennbar ist, die Schmalseiten 34 zu den Längsseiten der vorauslaufenden bzw. nachfolgenden Stückgüter 14, während die Längsseiten 32 dieses verdrehten Stückguts 14a parallel zur Transportrichtung 18 und zu den Längserstreckungsrichtungen der jeweiligen Horizontalfördereinrichtungen 16 angeordnet sind.

Bei der Betrachtung des bereits im Erfassungsbereich 22 des Manipulators 20 auf der Gruppier- und/oder Lagenbildungsstation 12 befindlichen verdrehten Stückgutes 14a leuchtet unmittelbar ein, dass dieses nicht in gleicher Weise und nach denselben Kriterien vom Manipulator 20 erfasst, verdreht und/oder verschoben und solchermaßen in seine Zielposition für die zu bildende Lagenanordnung einer Mehrzahl von positionierten Stückgütern 14 verbracht werden kann, ggf. noch gemeinsam mit einem oder zwei vorauslaufenden oder nachfolgenden Stückgütern 14, weil dies zumindest zu Problemen beim Erfassen des verdrehten Stückgutes 14a, normalerweise jedoch auch zu Störungen im Lagenbildungsprozess aufgrund von unerwarteten Kollisionen mit weiteren Stückgütern 14 führen würde.

Aus den genannten Gründen ist es sinnvoll, solche um 90° verdrehte Stückgüter 14a mittels der Sensoreinrichtung 24 bereits deutlich vor dem Eintritt der Stückgüter 14, 14a in den Erfassungsbereich 22 des Manipulators 20 zu erkennen und dem Manipulator 20 modifizierte Steuerbefehle 30 zur Verfügung zu stellen, die es ihm ermöglichen, solche Stückgüter 14a separat zu erfassen, bspw. mit ebenfalls um 90° verdrehten Greifbacken, und dem separat erfassten Stückgut 14a bspw. eine zusätzliche Drehung bei der Ansteuerung seiner Zielposition aufzuprägen, so dass es nicht mit regulär positionierten Stückgütern 14 kollidiert und sich in gewünschter Weise in das Lagenbild der übrigen Stückgüter 14 einfügt. D.h. der den Manipulator 20 bildende Greif- und Handhabungsroboter erhält mit den modifizierten Steuerbefehlen 30 angepasste Bewegungskurven und neue Greifparameter, wobei es darüber hinaus sinnvoll sein kann, die Bewegungsgeschwindigkeit des den Manipulator 20 bildenden Roboters zumindest während der separaten Behandlung des um 90° verdrehten Stückguts 14a zu reduzieren.

Eine in Fig. 1B erkennbare zusätzliche Option kann darin bestehen, die Sensoreinrichtung 24 an die zu erkennenden Stückgüter 14 anzupassen, insbesondere an deren Abmessungen, so dass es etwa sinnvoll sein kann, die Sensorik oder Teile der Sensorik quer zur Transportrichtung 18 verstellen zu können, so dass die entsprechenden Sensorelemente, die für die Sensoreinrichtungen 24 eingesetzt werden, in einem geringen Abstand zu den sensierten Stückgütern 14 positioniert werden können. Eine solche Anpassung kann insbesondere bei mechanisch arbeitenden Sensorelementen wie etwa bei Tastgliedern sinnvoll sein, kann allerdings auch bei optisch oder mit Ultraschall arbeitenden Sensorelementen Vorteile mit sich bringen.

Dagegen verdeutlicht die in Fig. 1A gezeigte Ausführungsform eine Variante mit fest positionierten Sensorelementen der jeweiligen Sensoreinrichtung 24.

Die Sensoreinrichtungen 24 können bei den in Fig. 1A und in Fig. 1B gezeigten Ausführungsvarianten bspw. durch Lichtschrankenelemente, durch relativ einfach aufgebaute Zeilensensoren o. dgl. gebildet sein. Wie schon erwähnt, können die Sensoreinrichtungen 24 jedoch auch mechanische Tastglieder o. dgl. umfassen, die in berührenden Kontakt mit den vorbeitransportierten Stückgütern 14, 14a gelangen.

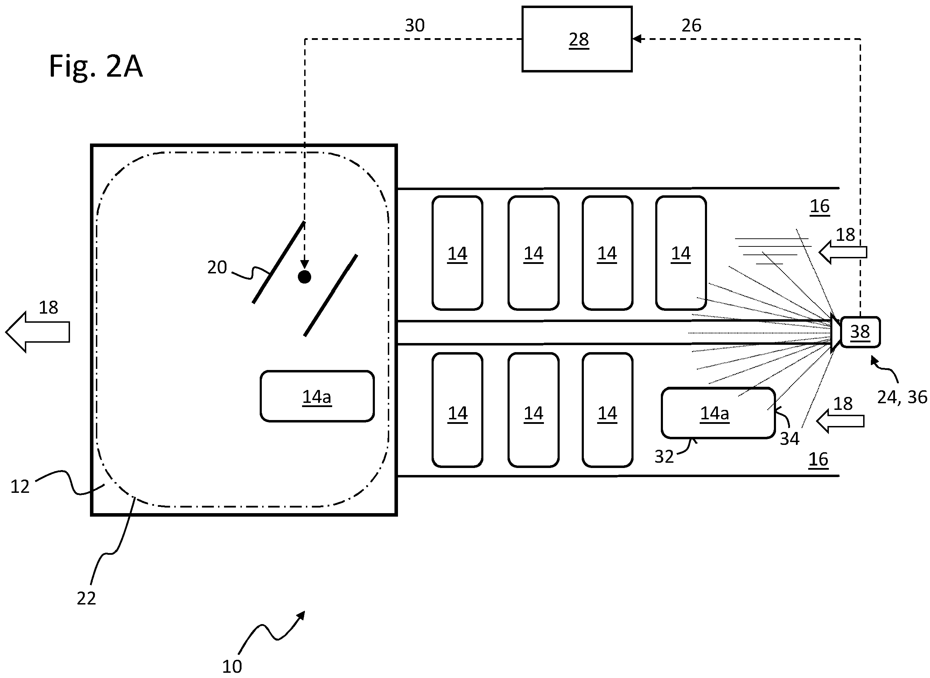

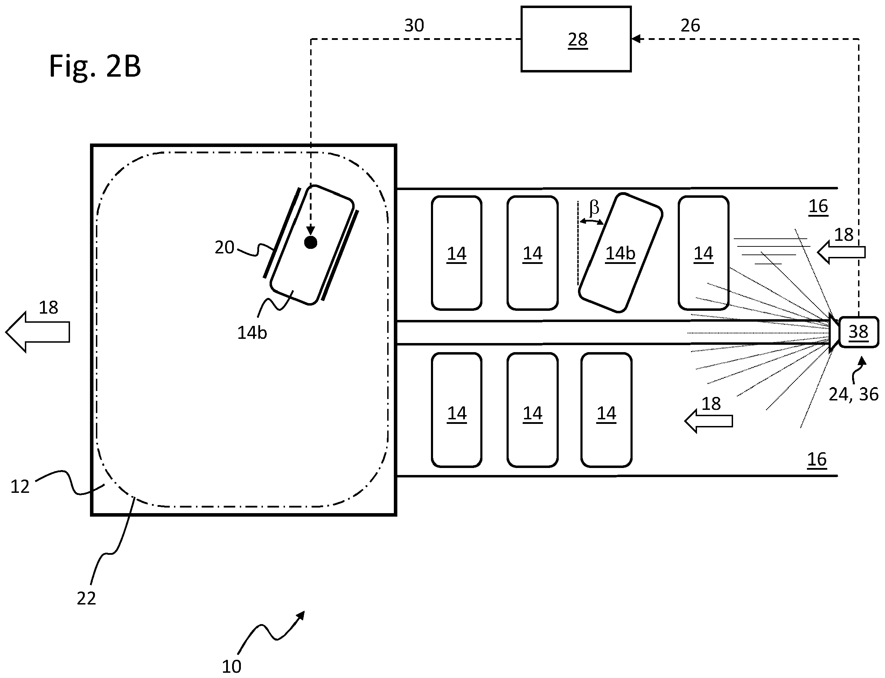

Dagegen verdeutlichen die schematischen Draufsichten der Fig. 2A und der Fig. 2B jeweils eine zweite Ausführungsvariante einer nicht erfinungsgemäßen Handhabungs- und/oder Lagenbildungsvorrichtung 10, bei der die Sensoreinrichtung 24 durch mindestens eine optische Erfassungseinrichtung 36, insbesondere durch eine elektronisch arbeitende Kamera 38 mit nachgeschalteter Bildauswertung für die von der optischen Erfassungseinrichtung 36 bzw. von der Kamera 38 erzeugten Ausgangssignale 26 gebildet ist. Diese ist gleichermaßen dafür vorbereitet und ausgestattet, verdrehte Stückgüter 14 zu erkennen, insbesondere um 90° verdrehte Stückgüter 14a, und entsprechende Ausgangssignale 26 aus den erfassten Bildern zu erzeugen, um mit Hilfe der nachgeschalteten Steuerungseinrichtung 28 modifizierte Steuerbefehle 30 für den Manipulator 20 generieren zu können.

D.h. der den Manipulator 20 bildende Handhabungs- und/oder Gruppierungs- und/oder Lagenbildungsroboter erhält mit den auf Grundlage der Bildauswertung modifizierten Steuerbefehlen 30 angepasste Bewegungskurven und neue Greifparameter, wobei es darüber hinaus sinnvoll sein kann, die Bewegungsgeschwindigkeit des den Manipulator 20 bildenden Roboters zumindest während der separaten Behandlung des um 90° verdrehten Stückguts 14a zu reduzieren.

Wahlweise kann zwei parallelen Horizontalfördereinrichtungen 16, die beide nebeneinander in den Erfassungsbereich 22 des Manipulators 20 münden, eine einzige optische Erfassungseinrichtung 36 oder eine einzige Kamera 38 zugeordnet sein (vgl. Fig. 2A, Fig. 2B), deren Bildauswertung in der Lage ist, die Stückgüter 14, 14a beider Horizontalfördereinrichtungen 16 zu erfassen. Ist eine höher auflösende Bilderfassung und/oder eine schnellere Signalverarbeitung gewünscht, kann es jedoch auch sinnvoll sein, jeder vorhandenen Horizontalfördereinrichtung 16 eine separate Sensoreinrichtung 24 in Gestalt einer eigenen optischen Erfassungseinrichtung 36 oder einer eigenen Kamera 38 zuzuordnen.

Während die Fig. 2A die bereits erläuterte Situation eines gegenüber anderen Stückgütern 14 auf einer der beiden Horizontalfördereinrichtungen 16 um 90° verdrehten Stückgutes 14a verdeutlicht, zeigt die Fig. 2B eine Fördersituation, bei der zumindest eines der auf einer der Horizontalfördereinrichtungen 16 transportierten Stückgüter 14 eine Verdrehung um seine Hochachse von weniger als 90° aufweist. Das hier als verdrehtes Stückgut 14b bezeichnete Stückgut ist im dargestellten Ausführungsbeispiel der Fig. 2B um einen Drehwinkel β von etwa 25° in Drehrichtung nach rechts (in Draufsicht auf Fig. 2B von oben) um seine Hochachse verdreht, was in der Folge der Bilderfassung mit der optischen Erfassungseinrichtung 36 oder der Kamera 38, der von dieser erzeugten Ausgangssignale 26, deren Verarbeitung in der Steuerungseinrichtung 28 und der Generierung von Steuerbefehlen 30 für den Manipulator 20 zu entsprechend veränderten Greifparametern und angepassten Verfahr- oder Bewegungskurven für die Positionierung des betroffenen Stückgutes 14b innerhalb des angestrebten Lagenbildes führen muss.

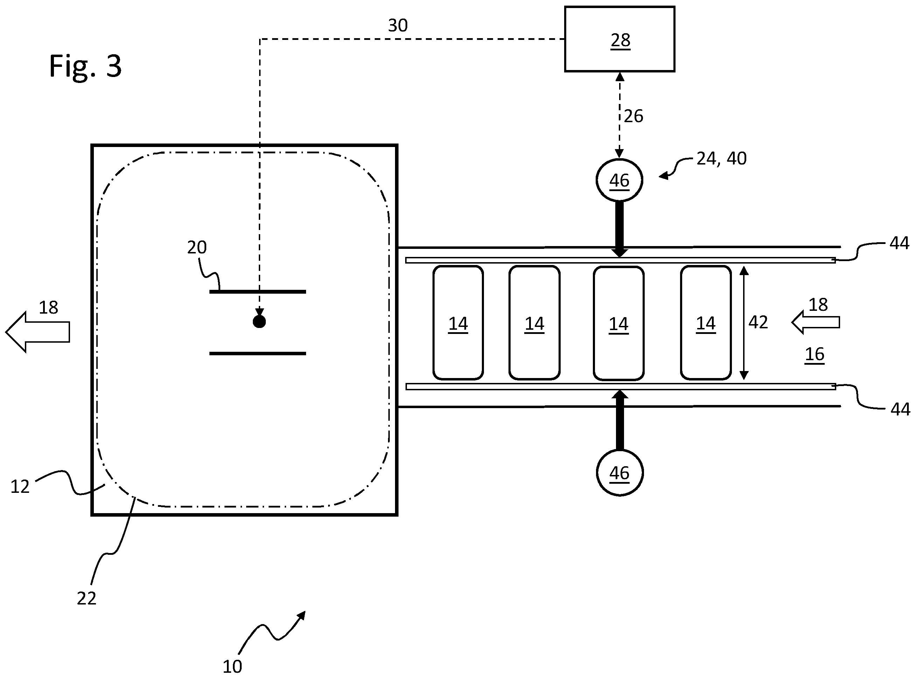

Eine Ausführungsvariante der erfindungsgemäßen Handhabungs- und/oder Lagenbildungsvorrichtung 10, bei der die Sensoreinrichtung 24 durch eine nach gänzlich anderem Prinzip arbeitende mechanische Abtastung 40 gebildet ist, zeigt die schematische Draufsicht der Fig. 3. Die hierbei eingesetzte Sensoreinrichtung 24 ist im Wesentlichen dafür geeignet, die Stückgutbreite 42 zu erkennen, indem während des Transports der Stückgüter 14 seitliche Geländerführungen 44 zu beiden Seiten des Transportweges der Stückgüter 14 auf der Horizontalfördereinrichtung 16 gegeneinander zugestellt werden, bis die Seitenflächen der Stückgüter 14 - hier an deren Schmalseiten 34 - leicht berührt werden, was durch eine Erfassung von Drehmomenten von Stellantrieben 46 für die verstellbaren seitlichen Geländerführungen 44 erfolgt.

Da die Stückgüter 14 bei berührendem Kontakt der gegeneinander zugestellten seitlichen Geländerführungen 44 abgebremst würden, werden diese vorzugsweise bei stillstehender Horizontalfördereinrichtung 16 zugestellt und anschließend wieder zumindest um einen kleinen Weg auseinander bewegt, um die Stückgüter 14 beim anschließenden Förder- und Gruppierungsvorgang ungehindert zwischen den seitlichen Geländerführungen 44 hindurchpassieren zu lassen.

Der weitere Gruppierungs- und/oder Lagenbildungsvorgang kann auf die oben beschriebene Weise ablaufen, wird aber vorzugsweise mit Stückgütern 14 einheitlicher Größe sowie jeweils gleicher Ausrichtung erfolgen, da die hier eingesetzte mechanische Abtastung 40 nach dem Initialisierungsvorgang nicht in der Lage ist, verdrehte, beschädigte oder abweichend dimensionierte Stückgüter 14 zu erkennen und dem Manipulator 20 entsprechende Steuerbefehle zu liefern, um solche Abweichungen beim Lagenbildungsprozess zu berücksichtigen und auszugleichen.

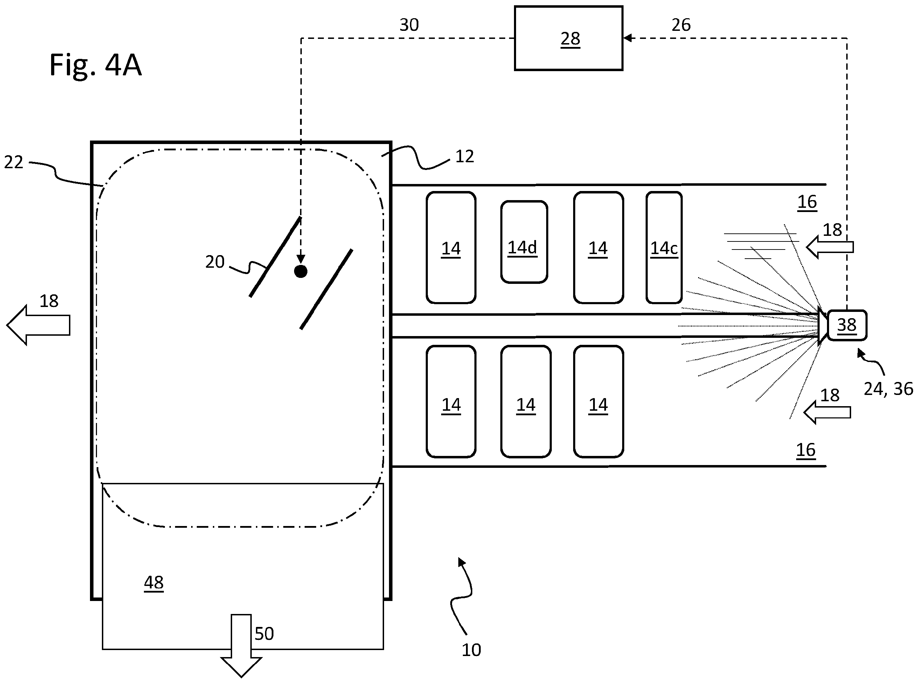

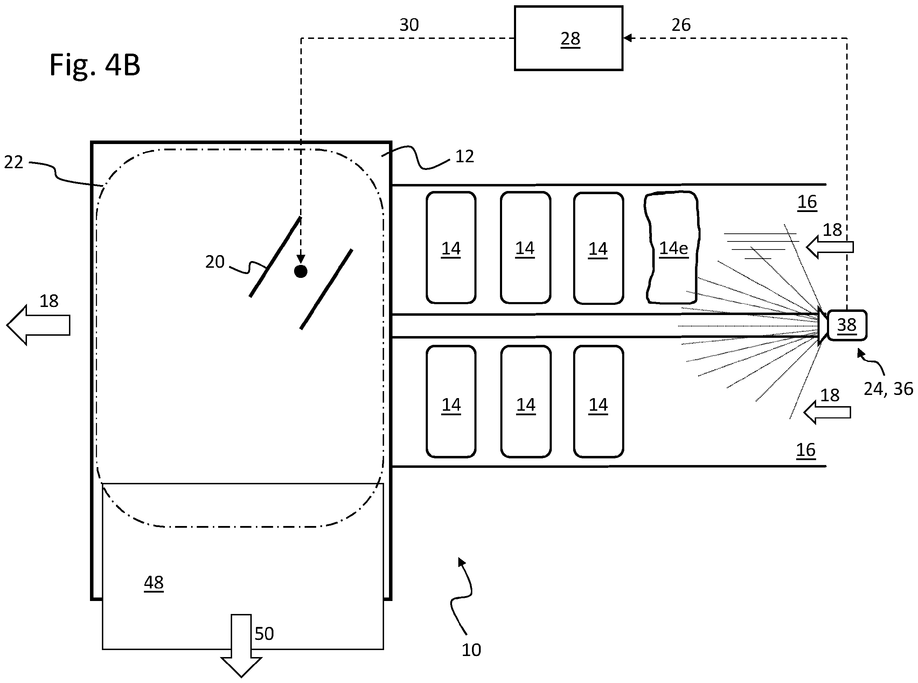

Die schematischen Draufsichten der Figuren 4A und 4B verdeutlichen jeweils eine weitere Ausführungsvariante einer nicht erfinungsgemäßen Handhabungs- und/oder Lagenbildungsvorrichtung 10 wobei hier der Gruppier- und/oder Lagenbildungsstation 12 jeweils ein Ausschleusbereich 48 für nicht in einen Lagenbildungsprozess integrierbare Stückgüter 14 zugeordnet ist. Der Ausschleusbereich 48 befindet sich randseitig am Erfassungsbereich 22 des Manipulators 20, so dass der Manipulator 20 einzelne Stückgüter 14, die nicht für eine jeweilige Lagenbildung berücksichtigt werden sollen, in den Ausschleusbereich 48 überführen kann, wo sie bspw. in einer zur Transportrichtung 18 senkrechten Abförderrichtung 50 einer Aussonderung oder einer weiteren Behandlung zugeführt werden können, die hier nicht näher erläutert werden muss.

Die Sensoreinrichtung 24, gebildet bspw. durch eine optische Erfassungseinrichtung 36 wie eine Kamera 38, ist bei der in Fig. 4A gezeigten Ausführungsvariante der Vorrichtung 10 dafür vorbereitet, abweichende Dimensionen einzelner oder mehrerer der auf den Horizontalfördereinrichtungen 16 transportierten Stückgüter 14 zu erkennen. Ebenso kann die Sensoreinrichtung 24 in der Lage sein, unterschiedliche Stückgutsorten zu erfassen und dem Manipulator 20 entsprechende Steuerbefehle 30 zu übermitteln, um nicht für eine Lagenbildung zu berücksichtigende Stückgutsorten und/oder Stückgutgrößen auszusondern und dem Ausschleusbereich 48 zuzuführen, oder um zur Bildung gemischter Stückgutlagen mit unterschiedlichen Sorten von Stückgütern 14 diese gezielt auszuwählen und bspw. an definierte Positionen innerhalb der Stückgutlage zu verbringen.

Die in der schematischen Draufsicht der Fig. 4A zu erkennenden unterschiedlichen Stückgutgrößen 14, 14c, 14d werden von der Sensoreinrichtung 24 erkannt, so dass der Manipulator 20 jeweils passende Steuerbefehle 30 zum passgenauen Ergreifen und Manipulieren dieser unterschiedlich dimensionierten Stückgüter 14, 14c, 14d erhält.

Die Sensoreinrichtung 24, gebildet bspw. durch eine optische Erfassungseinrichtung 36 wie eine Kamera 38, ist bei der in Fig. 4B gezeigten Ausführungsvariante der Vorrichtung 10 dafür vorbereitet, fehlerhafte Außenumrisse und/oder falsche bzw. unerwünschte Dimensionierungen einzelner oder mehrerer der auf den Horizontalfördereinrichtungen 16 transportierten Stückgüter 14, 14e zu erkennen. Da solche beschädigten oder fehlerhaften Stückgüter 14e nicht für eine Lagenbildung zu berücksichtigen sind, werden diese vorzugsweise mittels einer entsprechenden Manipulatorbewegung ausgesondert und dem Ausschleusbereich 48 zugeführt.

Das einzelne in der schematischen Draufsicht der Fig. 4B zu erkennende fehlerhafte oder beschädigte Stückgut 14e, das zwei einwandfreien Stückgütern 14 auf der oberen Horizontalfördereinrichtung 16 folgt, wird von der Sensoreinrichtung 24 erkannt, so dass dem Manipulator 20 zum richtigen Zeitpunkt passende Steuerbefehle 30 zum passgenauen Ergreifen und Überführen dieses beschädigten Stückgutes 14e zum Ausschleusbereich 48 übermittelt werden können.

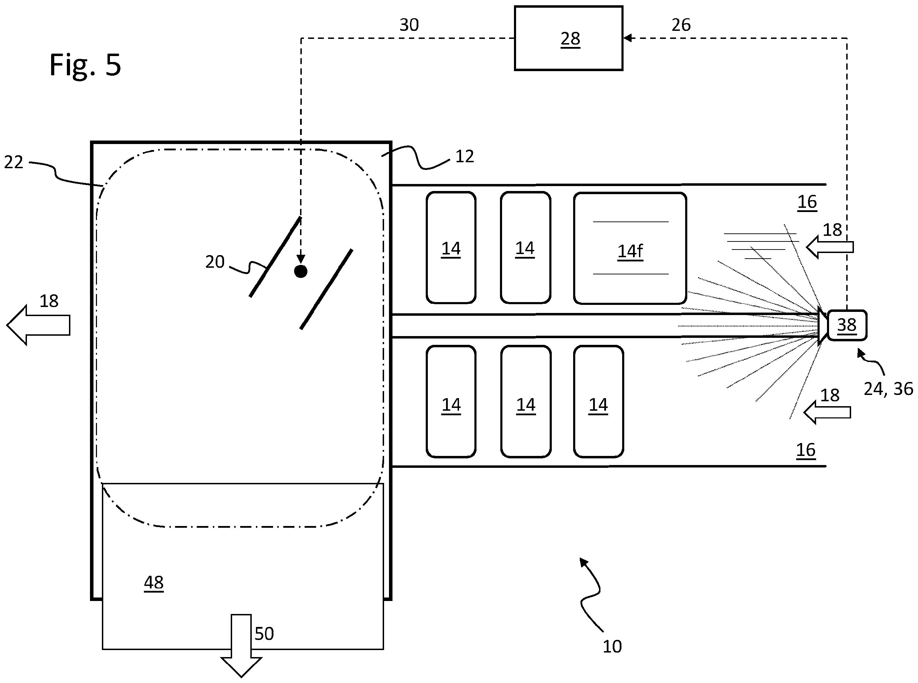

Die schematische Ansicht der Fig. 5 verdeutlicht darüber hinaus eine bisher noch nicht behandelte Transportsituation in einer nicht erfinungsgemäßen Handhabungs- und/oder Lagenbildungsvorrichtung, die je nach Ausgestaltung des Manipulators 20 unterschiedlich gehandhabt werden kann. Wenn einzelne Stückgüter 14f zwischen vorauslaufenden und nachfolgenden Stückgütern 14 liegend auf der Horizontalfördereinrichtung 16 transportiert werden, während die vorauslaufenden und nachfolgenden Stückgüter 14 stehend transportiert werden, dann kann es sich insbesondere um umgefallene Stückgüter 14f handeln, die entweder vom Manipulator 20 im Erfassungsbereich 22 aufgerichtet und dem Lagenbildungsprozess zur Verfügung gestellt werden oder ausgesondert und dem Ausschleusbereich 48 zugeführt werden können.

Eine Aufrichtung solcher umgefallener Stückgüter 14f ist allerdings nur dann sinnvoll, wenn sichergestellt ist, dass es sich bis auf die abweichende Lage des betroffenen Stückgutes 14f um ein einwandfreies und problemlos in den Lagenbildungsprozess integrierbares Stückgut 14, 14f handelt. Dies kann ggf. durch einen zweistufigen Erfassungsvorgang mit einer entsprechend ausgestatteten Sensoreinrichtung 24 erfolgen, die nicht nur die Lage der Stückgüter 14, 14f erfasst, sondern auch weitere Parameter, wie sie zuvor bereits genannt wurden, so etwa die Dimensionierung, die Sorten und/oder Verpackungsbeschädigungen etc.

Falls jedoch der Manipulator 20 aufgrund seiner Ausstattung und seiner Beweglichkeit gar nicht in der Lage ist, umgefallene Stückgüter 14f innerhalb seines Erfassungsbereiches 22 aufzurichten und anschließend in einer definierte Position und/oder Ausrichtung innerhalb einer zu bildenden Stückgutlage zu verbringen, bleibt nur die Option, solche umgefallenen Stückgüter 14f auszuschleusen und diese somit direkt dem Ausschleusbereich 48 zuzuführen.

Die Erfindung wurde unter Bezugnahme auf eine bevorzugte Ausführungsform beschrieben. Es ist jedoch für einen Fachmann vorstellbar, dass Abwandlungen oder Änderungen gemacht werden können, sofern sie dabei den Schutzbereich der nachstehenden Ansprüche nicht verlassen.

### Bezugszeichenliste

- 10: Handhabungsvorrichtung, Lagenbildungsvorrichtung, Handhabungs- und/oder Lagenbildungsvorrichtung
- 12: Gruppierstation, Lagenbildungsstation, Gruppier- und/oder Lagenbildungsstation
- 14: Stückgut
- 14a: verdrehtes Stückgut, um 90° verdrehtes Stückgut (Drehwinkel um die Hochachse ca. 90°)
- 14b: verdrehtes Stückgut, um weniger als 90° verdrehtes Stückgut (Drehwinkel um die Hochachse ca. 20 ... 30°)
- 14c: abweichend dimensioniertes Stückgut, schmaleres Stückgut
- 14d: abweichend dimensioniertes Stückgut, kleineres Stückgut
- 14e: fehlerhaftes Stückgut, beschädigtes Stückgut
- 14f: umgefallenes Stückgut
- 16: Horizontalfördereinrichtung
- 18: Förderrichtung, Transportrichtung
- 20: Manipulator
- 22: Erfassungsbereich
- 24: Sensoreinrichtung
- 26: Ausgangssignal, elektrisches Ausgangssignal
- 28: Steuerungseinrichtung
- 30: Steuerbefehl, elektrischer Steuerbefehl
- 32: Längsseite (Stückgut)
- 34: Schmalseite (Stückgut)
- 36: optische Erfassungseinrichtung
- 38: Kamera
- 40: mechanische Abtastung
- 42: Stückgutbreite
- 44: seitliche Geländerführung
- 46: Stellantrieb
- 48: Ausschleusbereich
- 50: Abförderrichtung

- β: Drehwinkel

## Patentansprüche

1. Verfahren zum Umgang mit und/oder zur Handhabung von in mindestens einer Reihe bewegten Stückgütern (14, 14a, 14b, 14c, 14d, 14e, 14f), insbesondere zum Zwecke der Lagenbildung, welche Stückgüter (14, 14a, 14b, 14c, 14d, 14e, 14f) einer Reihe jeweils ungefähr gleiche oder unterschiedliche und/oder variable Abstände voneinander aufweisen, und welche Stückgüter (14, 14a, 14b, 14c, 14d, 14e, 14f) von einer Verpackungs- und/oder Ausstattungsstation oder einer anderen vorgeordneten Handhabungs- und/oder Fördereinrichtung mittels wenigstens einer Horizontalfördereinrichtung (16) einer einen Erfassungsbereich (22) aufweisenden Gruppier- und/oder Lagenbildungsstation (12) zugeführt werden, welcher Erfassungsbereich (22) einen Bewegungsraum mindestens eines Manipulators (20) definiert und/oder räumlich begrenzt, welcher mindestens eine Manipulator (20) in einem Arbeitstakt mindestens ein Stückgut (14, 14a, 14b, 14c, 14d, 14e, 14f) von der mindestens einen Reihe greifend erfasst und in eine definierte relative Zielposition und/oder Zielausrichtung verbringt, insbesondere im Hinblick auf eine zu bildende Stückgutlage,
- wobei der wenigstens einen der Gruppier- und/oder Lagenbildungsstation (12) in Transportrichtung (18) der Stückgüter (14, 14a, 14b, 14c, 14d, 14e, 14f) vorgeordneten Horizontalfördereinrichtung (16) wenigstens eine Sensoreinrichtung (24) zur Gewinnung von Positions- und/oder Abmessungs- und/oder Ausrichtungsdaten in Bezug auf die auf der Horizontalfördereinrichtung (16) transportierten Stückgüter (14, 14a, 14b, 14c, 14d, 14e, 14f) zugeordnet ist,
- wobei die Sensoreinrichtung (24) aus den gewonnenen Positions- und/oder Abmessungs- und/oder Ausrichtungsdaten für die auf der Horizontalfördereinrichtung (16) transportierten Stückgüter (14, 14a, 14b, 14c, 14d, 14e, 14f) elektronische Ausgangssignale (26) generiert,
- welche Ausgangssignale (26) verarbeitet und zur auf die erfassten Stückgutpositionen und/oder -abmessungen und/oder -ausrichtungen abgestimmten Ansteuerung des Manipulators (20) verwendet werden, insbesondere im Hinblick auf eine jeweilige mittels des Manipulators (20) zu bildende Stückgutlage,
- wobei der Manipulator (20) einzelne oder mehrere Stückgüter (14, 14a, 14b, 14c, 14d, 14e, 14f) auf Grundlage der von der Sensoreinrichtung (24) gewonnenen und verarbeiteten und einer Steuerungseinrichtung (28) des Manipulators (20) zur Verfügung gestellten Sensorsignale (26) innerhalb des Erfassungsbereiches (22) bewegt und/oder dreht und/oder verschiebt,
- wobei die Sensoreinrichtung (24) eine mechanische Abtastung durchführt,
**dadurch gekennzeichnet, dass**
- die Sensoreinrichtung (24) die mechanische Abtastung (40) mit verstellbaren seitlichen Geländerführungen (44) zu beiden Seiten eines Transportweges der Stückgüter (14) auf der Horizontalfördereinrichtung (16) durchführt, wobei mittels einer Erfassung von Drehmomenten von Stellantrieben (46) bei der Zustellung der verstellbaren seitlichen Geländerführungen (44) zu Seitenflächen der Stückgüter (14) eine Stückgutbreite (42) ermittelt wird.

2. Verfahren nach Anspruch 1, bei dem der Manipulator (20) die Positionen einzelner oder mehrerer der auf der Horizontalfördereinrichtung (16) zum Erfassungsbereich (22) beförderten Stückgüter (14, 14a, 14b, 14c, 14d, 14e, 14f) auf Grundlage der von der Sensoreinrichtung (24) gewonnenen und verarbeiteten und einer Steuerungseinrichtung (28) des Manipulators (20) zur Verfügung gestellten Sensorsignale (26) innerhalb des Erfassungsbereiches (22) korrigiert und/oder verändert.

3. Verfahren nach Anspruch 1, bei dem der Manipulator (20) einzelne oder mehrere der auf der Horizontalfördereinrichtung (16) zum Erfassungsbereich (22) beförderten Stückgüter (14, 14a, 14b, 14c, 14d, 14e, 14f) auf Grundlage der von der Sensoreinrichtung (24) gewonnenen und verarbeiteten und einer Steuerungseinrichtung (28) des Manipulators (20) zur Verfügung gestellten Sensorsignale (26) innerhalb des Erfassungsbereiches (22) entnimmt und aus dem Erfassungsbereich (22) herausbewegt und/oder aus der weiteren Verarbeitung ausschleust.

4. Verfahren nach einem der Ansprüche 1 bis 3, wobei das Zustellen der Geländerführungen (44) bei stillstehender Horizontalfördereinrichtung (16) erfolgt, wobei die Geländerführungen (44) anschließend wieder zumindest um einen kleinen Weg auseinander bewegt werden, um die Stückgüter beim anschließenden Förder- und Gruppierungsvorgang ungehindert zwischen den seitlichen Geländerführungen (44) hindurchpassieren zu lassen

5. Handhabungs- und/oder Lagenbildungsvorrichtung (10), mit wenigstens einer Horizontalfördereinrichtung (16) zur reihenweisen Beförderung von gleichmäßig oder unterschiedlich voneinander beabstandeten Stückgütern (14, 14a, 14b, 14c, 14d, 14e, 14f) von einer Verpackungs- und/oder Ausstattungsstation oder einer anderen vorgeordneten Handhabungs- und/oder Fördereinrichtung zu einer einen Erfassungsbereich (22) aufweisenden Gruppier- und/oder Lagenbildungsstation (12), welcher Erfassungsbereich (22) einen Bewegungsraum mindestens eines Manipulators (20) definiert und/oder räumlich begrenzt, welcher mindestens eine Manipulator (20) in einem Arbeitstakt mindestens ein Stückgut (14, 14a, 14b, 14c, 14d, 14e, 14f) von der mindestens einen zugeführten Reihe greifend erfassen und in eine definierte relative Zielposition und/oder Zielausrichtung verbringen kann, insbesondere im Hinblick auf eine zu bildende Stückgutlage,
- wobei die der Gruppier- und/oder Lagenbildungsstation (12) in Transportrichtung (18) der Stückgüter (14, 14a, 14b, 14c, 14d, 14e, 14f) vorgeordnete wenigstens eine Horizontalfördereinrichtung (16) wenigstens eine Sensoreinrichtung (24) zur Gewinnung von Positions- und/oder Abmessungs- und/oder Ausrichtungsdaten in Bezug auf die auf der Horizontalfördereinrichtung (16) transportierten Stückgüter (14, 14a, 14b, 14c, 14d, 14e, 14f) aufweist,
- wobei die Sensoreinrichtung (24) aus den gewonnenen Positions- und/oder Abmessungs- und/oder Ausrichtungsdaten für die auf der Horizontalfördereinrichtung (16) transportierten Stückgüter (14, 14a, 14b, 14c, 14d, 14e, 14f) elektronische Ausgangssignale (26) generiert,
- welche Ausgangssignale (26) in einer Steuerungseinrichtung (28) verarbeitet werden, welche Steuerungseinrichtung (28) die Bewegungen des Manipulators (20) innerhalb des Bewegungsraumes) zum Zwecke der Lagenbildung aus den mittels der Horizontalfördereinrichtung (16) der Gruppier- und/oder Lagenbildungsstation (12) zugeführten Stückgütern (14, 14a, 14b, 14c, 14d, 14e, 14f) steuert,
- wobei die Sensoreinrichtung (24) eine mechanische Abtastung umfasst,
**dadurch gekennzeichnet, dass**
- die Sensoreinrichtung (24) die mechanische Abtastung (40) mit verstellbaren seitlichen Geländerführungen (44) zu beiden Seiten eines Transportweges der Stückgüter (14) auf der Horizontalfördereinrichtung (16) durchführt, wobei mittels Erfassung von Drehmomenten von Stellantrieben (46) für die verstellbaren seitlichen Geländerführungen (44) eine Stückgutbreite (42) ableitbar ist.

6. Vorrichtung nach Anspruch 5, bei dem die Steuerungseinrichtung (28) für die Bewegungssteuerung des Manipulators (20) mit einer steuerbaren Ausschleuseinrichtung (48) gekoppelt ist.

## Claims

1. A method for treating and/or handling piece goods (14, 14a, 14b, 14c, 14d, 14e, 14f) being moved in at least one row, in particular, for the purpose of forming layers, which piece goods (14, 14a, 14b, 14c, 14d, 14e, 14f) of a row each have approximately equal or different and/or variable spaces between each other, and which piece goods (14, 14a, 14b, 14c, 14d, 14e, 14f) are fed by means of at least one horizontal conveyor (16) from a packaging station and/or equipping station or from another upstream handling device and/or conveying device to a grouping station and/or layer-forming station (12) having a seizing range (22), which seizing range (22) defines and/or spatially delimits a movement range of at least one manipulator (20), which at least one manipulator (20) seizes at least one piece good (14, 14a, 14b, 14c, 14d, 14e, 14f) in a work cycle in a gripping manner from the at least one row and moves it into a defined relative target position and/or target alignment, in particular, with regard to a piece good layer to be formed,
- wherein the at least one horizontal conveyor (16) arranged upstream in transport direction (18) of the piece goods (14, 14a, 14b, 14c, 14d, 14e, 14f) from the grouping station and/or layer-forming station (12) is assigned at least one sensor device (24) for the acquisition of position data and/or dimension data and/or alignment data regarding the piece goods (14, 14a, 14b, 14c, 14d, 14e, 14f) being transported on the horizontal conveyor (16),
- wherein the sensor device (24) generates electronic output signals (26) from the acquired position data and/or dimension data and/or alignment data for the piece goods (14, 14a, 14b, 14c, 14d, 14e, 14f) being transported on the horizontal conveyor (16),
- which output signals (26) are processed and used to control the manipulator (20) in a manner adapted to the detected positions and/or dimensions and/or alignments of piece goods, in particular, with regard to a particular piece good layer to be formed by means of the manipulator (20),
- wherein the manipulator (20) moves and/or rotates and/or shifts individual or a plurality of piece goods (14, 14a, 14b, 14c, 14d, 14e, 14f) within the seizing range (22) based on the sensor signals (26) acquired and processed by the sensor device (24) and provided to a control device (28) of the manipulator (20),
- wherein the sensor device (24) performs a mechanical scan,
**characterised in that**
- the sensor device (24) performs the mechanical scan (40) with adjustable lateral guide rails (44) on both sides of a transport path of the piece goods (14) on the horizontal conveyor (16), wherein a width of a piece good (42) is determined by means of a detection of torques of actuators (46) during the advancing of the adjustable lateral guide rails (44) toward side surfaces of the piece goods (14).

2. The method according to claim 1, in which the manipulator (20) corrects and/or changes the positions of individual or of a plurality of the piece goods (14, 14a, 14b, 14c, 14d, 14e, 14f) within the seizing range (22), the piece goods (14, 14a, 14b, 14c, 14d, 14e, 14f) having been conveyed on the horizontal conveyor (16) to the seizing range (22), based on the sensor signals (26) acquired and processed by the sensor device (24) and provided to a control device (28) of the manipulator (20).

3. The method according to claim 1, in which the manipulator (20) removes individual or a plurality of the piece goods (14, 14a, 14b, 14c, 14d, 14e, 14f) within the seizing range (22), the piece goods (14, 14a, 14b, 14c, 14d, 14e, 14f) having been conveyed on the horizontal conveyor (16) to the seizing range (22), and moves the piece goods (14, 14a, 14b, 14c, 14d, 14e, 14f) out of the seizing range (22) and/or discharges them from the further processing based on the sensor signals (26) acquired and processed by the sensor device (24) and provided to a control device (28) of the manipulator (20).

4. The method according to one of the claims 1 to 3, wherein the advancing of the guide rails (44) is carried out while the horizontal conveyor (16) is idle, wherein the guide rails (44) are subsequently moved back apart by at least a small distance in order to allow the piece goods to pass through unhindered between the lateral guide rails (44) in the subsequent conveying operation and grouping operation.

5. A handling apparatus and/or layer-forming apparatus (10), with at least one horizontal conveyor (16) for conveying piece goods (14, 14a, 14b, 14c, 14d, 14e, 14f), which are equally or differently spaced apart, in rows from a packaging station and/or equipping station or from another upstream handling device and/or conveying device to a grouping station and/or layer-forming station (12) having a seizing range (22), which seizing range (22) defines and/or spatially delimits a movement range of at least one manipulator (20), which at least one manipulator (20) can seize at least one piece good (14, 14a, 14b, 14c, 14d, 14e, 14f) in a work cycle in a gripping manner from the at least one row being fed and can move the it into a defined relative target position and/or target alignment, in particular, with regard to a piece good layer to be formed,
- wherein the at least one horizontal conveyor (16) arranged upstream in transport direction (18) of the piece goods (14, 14a, 14b, 14c, 14d, 14e, 14f) from the grouping station and/or layer-forming station (12) has at least one sensor device (24) for the acquisition of position data and/or dimension data and/or alignment data regarding the piece goods (14, 14a, 14b, 14c, 14d, 14e, 14f) being transported on the horizontal conveyor (16),
- wherein the sensor device (24) generates electronic output signals (26) from the acquired position data and/or dimension data and/or alignment data for the piece goods (14, 14a, 14b, 14c, 14d, 14e, 14f) being transported on the horizontal conveyor (16),
- which output signals (26) are processed in a control device (28), which control device (28) controls the movements of the manipulator (20) within the movement range for the purpose of forming layers from the piece goods (14, 14a, 14b, 14c, 14d, 14e, 14f) being fed by means of the horizontal conveyor (16) to the grouping station and/or layer-forming station (12),
- wherein the sensor device (24) comprises a mechanical scan,
**characterised in that**
- the sensor device (24) performs the mechanical scan (40) with adjustable lateral guide rails (44) on both sides of a transport path of the piece goods (14) on the horizontal conveyor (16), wherein a width of a piece good (42) is derivable by means of detecting torques of actuators (46) for the adjustable lateral guide rails (44).

6. The apparatus according to claim 5, in which the control device (28) for the movement control of the manipulator (20) is coupled with a controllable discharge device (48).

## Revendications

1. Procédé de manutention et/ou de manipulation de produits de détail (14, 14a, 14b, 14c, 14d, 14e, 14f) déplacés en au moins une rangée, en particulier en vue de la formation de couches, lesquels produits de détail (14, 14a, 14b, 14c, 14d, 14e, 14f) d'une rangée présentent chacun des distances à peu prés égales ou différentes et/ou variables les uns des autres, et lesquels produits de détail (14, 14a, 14b, 14c, 14d, 14e, 14f) sont amenés depuis un poste d'emballage et/ou d'équipement ou d'un autre dispositif de manipulation et/ou de transport situé en amont, au moyen d'au moins un dispositif de transport horizontal (16), à un poste de groupement et/ou de formation de couches (12) présentant une zone de saisie (22), laquelle zone de saisie (22) définit et/ou limite spatialement un espace de déplacement d'au moins un manipulateur (20), lequel au moins un manipulateur (20) saisit par préhension au moins un produit de détail (14, 14a, 14b, 14c, 14d, 14e, 14f) de ladite au moins une rangée dans un cycle de travail et déplace celui-ci dans une position cible et/ou orientation cible relative(s) définie(s), en particulier en vue d'une couche de produits de détail à former,
- dans lequel audit au moins un dispositif de transport horizontal (16) qui est disposé en amont du poste de groupement et/ou de formation de couches (12) dans la direction de transport (18) des produits de détail (14, 14a, 14b, 14c, 14d, 14e, 14f) est associé au moins un dispositif de capteur (24) destiné à obtenir des données de position et/ou de dimension et/ou d'orientation par rapport aux produits de détail (14, 14a, 14b, 14c, 14d, 14e, 14f) transportés sur le dispositif de transport horizontal (16),
- dans lequel le dispositif de capteur (24) génère des signaux de sortie électroniques (26) à partir des données obtenues de position et/ou de dimension et/ou d'orientation pour les produits de détail (14, 14a, 14b, 14c, 14d, 14e, 14f) transportés sur le dispositif de transport horizontal (16)
- lesquels signaux de sortie (26) sont traités et sont utilisés pour commander le manipulateur (20) d'une manière coordonnée avec les positions et/ou dimensions et/ou orientations de produits de détail saisies, en particulier en vue d'une couche de produits de détail respective à former au moyen du manipulateur (20),
- dans lequel le manipulateur (20) meut et/ou tourne et/ou déplace un ou plusieurs produits de détail (14, 14a, 14b, 14c, 14d, 14e, 14f) à l'intérieur de la zone de saisie (22) sur la base des signaux de capteur (26) obtenus par le dispositif de capteur (24) et traités et fournis à un dispositif de commande (28) du manipulateur (20),
- dans lequel le dispositif de capteur (24) effectue un balayage mécanique,
**caractérisé par le fait que**
- le dispositif de capteur (24) effectue le balayage mécanique (40) au moyen de guides rampes latéraux réglables (44) des deux côtés d'un chemin de transport des produits de détail (14) sur le dispositif de transport horizontal (16), dans lequel une largeur de produit de détail (42) est déterminée au moyen d'une détection de couples de mécanismes de commande (46) lorsque les guides rampes latéraux réglables (44) sont amenés vers des surfaces latérales des produits de détail (14).

2. Procédé selon la revendication 1, dans lequel le manipulateur (20) corrige et/ou modifie, à l'intérieur de la zone de saisie (22), les positions de produits de détail (14, 14a, 14b, 14c, 14d, 14e, 14f) individuels ou de plusieurs de ceux-ci transportés sur le dispositif de transport horizontal (16) vers ladite zone de saisie (22), sur la base des signaux de capteur (26) obtenus par le dispositif de capteur (24) et traités et fournis à un dispositif de commande (28) du manipulateur (20).

3. Procédé selon la revendication 1, dans lequel le manipulateur (20) retire des produits de détail (14, 14a, 14b, 14c, 14d, 14e, 14f) individuels ou plusieurs de ceux-ci transportés sur le dispositif de transport horizontal (16) vers ladite zone de saisie (22), à l'intérieur de la zone de saisie (22) et déplacé ceux-ci hors de la zone de saisie (22) et/ou évacue ceux-ci du traitement ultérieur, sur la base des signaux de capteur (26) obtenus par le dispositif de capteur (24) et traités et fournis à un dispositif de commande (28) du manipulateur (20).

4. Procédé selon l'une quelconque des revendications 1 à 3, dans lequel les guides rampes (44) sont approchés lorsque le dispositif de transport horizontal (16) est à l'arrêt, dans lequel les guides rampes (44) sont ensuite à nouveau écartés d'au moins une petite distance afin de laisser passer sans obstacles les produits de détail entre les guides rampes (44) latéraux lors de l'opération suivante de transport et de groupement.

5. Dispositif de manutention et/ou de formation de couches (10), comprenant au moins un dispositif de transport horizontal (16) destiné à transporter par rangées des produits de détail (14, 14a, 14b, 14c, 14d, 14e, 14f) espacés régulièrement ou différemment les uns des autres, depuis un poste d'emballage et/ou d'équipement ou d'un autre dispositif de manipulation et/ou de transport situé en amont, vers un poste de groupement et/ou de formation de couches (12) présentant une zone de saisie (22), laquelle zone de saisie (22) définit et/ou limite spatialement un espace de déplacement d'au moins un manipulateur (20), lequel au moins un manipulateur (20) peut, dans un cycle de travail, saisir par préhension au moins un produit de détail (14, 14a, 14b, 14c, 14d, 14e, 14f) de ladite au moins une rangée amenée et amener celui-ci dans une position cible et/ou orientation cible relative(s) définie(s), en particulier en vue d'une couche de produits de détail à former,
- dans lequel ledit au moins un dispositif de transport horizontal (16) qui est disposé en amont du poste de groupement et/ou de formation de couches (12) dans la direction de transport (18) des produits de détail (14, 14a, 14b, 14c, 14d, 14e, 14f) présente au moins un dispositif de capteur (24) destiné à obtenir des données de position et/ou de dimension et/ou d'orientation par rapport aux produits de détail (14, 14a, 14b, 14c, 14d, 14e, 14f) transportés sur le dispositif de transport horizontal (16),
- dans lequel le dispositif de capteur (24) génère des signaux de sortie électroniques (26) à partir des données obtenues de position et/ou de dimension et/ou d'orientation pour les produits de détail (14, 14a, 14b, 14c, 14d, 14e, 14f) transportés sur le dispositif de transport horizontal (16),
- lesquels signaux de sortie (26) sont traités dans un dispositif de commande (28), lequel dispositif de commande (28) commande les mouvements du manipulateur (20) à l'intérieur de l'espace de mouvement en vue de la formation de couches à partir des produits de détail (14, 14a, 14b, 14c, 14d, 14e, 14f) amenés au moyen du dispositif de transport horizontal (16) au poste de groupement et/ou de formation de couches (12),
- dans lequel le dispositif de capteur (24) comprend un balayage mécanique,
**caractérisé par le fait que**
- le dispositif de capteur (24) effectue le balayage mécanique (40) au moyen de guides rampes latéraux réglables (44) des deux côtés d'un chemin de transport des produits de détail (14) sur le dispositif de transport horizontal (16), dans lequel une largeur de produit de détail (42) peut être dérivée au moyen d'une détection de couples de mécanismes de commande (46) pour les guides rampes latéraux réglables (44).

6. Dispositif selon la revendication 5, dans lequel, pour la commande de mouvement du manipulateur (20), le dispositif de commande (28) est couplé à un dispositif d'évacuation (48) commandable.
